(19) **Europäisches Patentamt**
**European Patent Office**
**Office européen des brevets**

(11) **EP 4 398 131 A1**

(12) **EUROPEAN PATENT APPLICATION**
published in accordance with Art. 153(4) EPC

(43) Date of publication:
**10.07.2024 Bulletin 2024/28**

(21) Application number: **22871575.1**

(22) Date of filing: **13.07.2022**

(51) International Patent Classification (IPC):
**G06F 17/14** (2006.01)

(52) Cooperative Patent Classification (CPC):
**G06F 15/78; G06F 17/14**

(86) International application number:
**PCT/CN2022/105490**

(87) International publication number:
**WO 2023/045516 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 CN 202111132603**
**27.12.2021 CN 202111617811**

(71) Applicant: **Huawei Technologies Co., Ltd.**
**Shenzhen, Guangdong 518129 (CN)**

(72) Inventors:
• **PAN, Xiaogang**
**Shenzhen, Guangdong 518129 (CN)**
• **LIN, Tengyi**
**Shenzhen, Guangdong 518129 (CN)**
• **DING, Zhaohui**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **FFT EXECUTION METHOD, APPARATUS AND DEVICE**

(57) A method, an apparatus, and a device for performing FFT are provided. The method includes: receiving a fast Fourier transformation FFT execution request sent by an application program; obtaining first input data on which an FFT calculation needs to be performed; decomposing the FFT calculation into a plurality of calculation stages based on a cardinality of the FFT calculation, where each calculation stage includes a DFT calculation; determining a DFT calculation matrix corresponding to the DFT calculation in each calculation stage; determining, based on input data of a corresponding calculation stage when a calculation of each calculation stage is performed, a first data matrix on which a matrix operation is performed with the DFT calculation matrix; and performing a matrix multiplication calculation on the DFT calculation matrix and the first data matrix to implement the DFT calculation, and returning a calculation result to the application program after the plurality of calculation stages are completed. This can improve efficiency of performing the FFT.

FIG. 6

**Description**

This application claims priority to Chinese Patent Application No. 202111132603.3, filed on September 27, 2021 and entitled "METHOD AND APPARATUS FOR IMPLEMENTING FAST FOURIER TRANSFORM", and to Chinese Patent Application No. 202111617811.2, filed on December 27, 2021 and entitled "METHOD, APPARATUS, AND DEVICE FOR PERFORMING FFT", which are incorporated herein by reference in their entireties.

**TECHNICAL FIELD**

This application relates to the field of computer technologies, and in particular, to a method, an apparatus, and a device for performing FFT.

**BACKGROUND**

Discrete Fourier transform (Discrete Fourier Transform, DFT) is a common technique in the field of computers, and is used to convert discrete time-domain data and discrete frequency-domain data. Generally, during DFT, a fast Fourier transform (Fast Fourier Transform, FFT) technique is used to improve the processing efficiency.
In a related technology, the FFT may be implemented through a system on chip (System on Chip, SOC) with a scalar calculation unit and/or a vector (vector) calculation unit, that is, the FFT may be implemented through a scalar operation and/or a vector operation. However, efficiency of implementing the FFT through the scalar operation and/or the vector operation is still not high.

**SUMMARY**

Embodiments of this application provide a method, an apparatus, and a device for performing FFT, to improve efficiency of performing the FFT. Technical solutions are as follows.
According to a first aspect, a method for performing FFT is provided, where the method includes: receiving a fast Fourier transformation FFT execution request sent by an application program; obtaining first input data on which an FFT calculation needs to be performed and that is indicated by the FFT execution request; decomposing the FFT calculation into a plurality of calculation stages based on a cardinality of the FFT calculation, where input data of a first calculation stage in the plurality of calculation stages is the first input data, input data of a second calculation stage after the first calculation stage is output data of a previous calculation stage of the second calculation stage, a third calculation stage in the plurality of calculation stages includes a DFT calculation, and the third calculation stage is any one of the plurality of calculation stages; determining a DFT calculation matrix corresponding to the DFT calculation in the third calculation stage; determining, based on input data of the third calculation stage when a calculation in the third calculation stage is performed, a first data matrix on which a matrix operation is performed with the DFT calculation matrix; and performing a matrix multiplication calculation on the DFT calculation matrix and the first data matrix to implement the DFT calculation, and returning a calculation result to the application program after the plurality of calculation stages are completed. In the solution shown in this embodiment of this application, after receiving the FFT execution request sent by the application program, a processor may decompose the FFT calculation into a plurality of calculation stages based on the cardinality of the FFT calculation, and may determine the DFT calculation matrix of the DFT calculation in each calculation stage. When the DFT calculation is performed, the matrix multiplication calculation may be performed on the first data matrix and the DFT calculation matrix through a matrix operation unit, to implement the DFT calculation. In this way, the DFT calculation in calculation stages is converted into the matrix operation, and the matrix operation may be implemented through the matrix operation unit. In this way, one matrix operation may complete the DFT calculation on a plurality of data elements in the first data matrix, so that efficiency of performing the DFT calculation in the calculation stages can be improved, and then efficiency of performing the FFT calculation can be improved.
In a possible implementation, the determining a DFT calculation matrix corresponding to the DFT calculation in the third calculation stage includes: converting a DFT coefficient corresponding to the DFT calculation in the third calculation stage into the DFT calculation matrix.
The third calculation stage is any calculation stage in the FFT calculation, the DFT calculation in each calculation stage is formed by a group of calculation formulas for performing addition of complex numbers and multiplication of complex numbers on the input data. The DFT coefficients refers to a coefficient of each piece of input data in the group of calculation formulas. A real part and an imaginary part of a complex number in the group of calculation formulas may be separated, and the group of calculation formulas is represented in a form of multiplying a matrix by a vector. The obtained matrix is the DFT calculation matrix. In this way, the DFT coefficient is converted into the DFT calculation matrix, so that the DFT calculation can be implemented through the matrix, and efficiency of the DFT calculation in the calculation stages can be improved.

In a possible implementation, the determining a DFT calculation matrix corresponding to the DFT calculation in the third calculation stage includes: determining, based on a cardinality corresponding to the third calculation stage and a preset correspondence between a cardinality and a DFT calculation matrix, the DFT calculation matrix corresponding to the DFT calculation in the third calculation stage.

The third calculation stage is any calculation stage in the FFT calculation. A person skilled in the art may preset a correspondence between each cardinality and the DFT calculation matrix. In this way, after the cardinality corresponding to the calculation stages in the FFT calculation is determined, the DFT calculation matrix corresponding to the DFT calculation in each calculation stage may be directly determined based on the correspondence, which can improve efficiency of determining the DFT calculation matrix corresponding to the calculation stages, thereby improving efficiency of performing the DFT calculation.

In a possible implementation, the third calculation stage further includes a rotation factor calculation; and the determining, based on input data of the third calculation stage, a first data matrix on which a matrix operation is performed with the DFT calculation matrix includes: performing the rotation factor calculation based on a rotation factor corresponding to the rotation factor calculation in the third calculation stage and the input data of the third calculation stage, to obtain input data of the DFT calculation; and converting the input data of the DFT calculation into the first data matrix on which the matrix operation is performed with the DFT calculation matrix. Each third calculation stage includes the DFT calculation and the rotation factor calculation. When the FFT calculation is implemented based on a decimation-in-time method, the rotation factor calculation in each calculation stage is before the DFT calculation, input data of the rotation factor calculation is input data of a corresponding calculation stage, and output data of the rotation factor calculation is the input data of the DFT calculation. In this way, the input data of the DFT may be obtained through rotation factor calculation on the input data of the third calculation stage. After the output data of the rotation factor calculation (that is, the input data of the DFT calculation) is obtained, the input data of the DFT calculation may be used to form the first data matrix, so that the matrix operation may be performed on the first data matrix and the DFT calculation matrix to implement the DFT calculation in the calculation stages, thereby improving execution efficiency of each calculation stage.

In a possible implementation, the performing the rotation factor calculation based on a rotation factor corresponding to the rotation factor calculation in the third calculation stage and the input data of the third calculation stage includes: if a quantity of times that a same rotation factor in the rotation factor calculation participates in the calculation is greater than or equal to a first quantity threshold, determining a rotation factor matrix corresponding to each rotation factor in the rotation factor calculation; converting the input data of the third calculation stage into a second data matrix; and performing the matrix multiplication calculation on the rotation factor matrix and the second data matrix to implement the rotation factor calculation, to obtain the first data matrix.

Each third calculation stage includes the DFT calculation and the rotation factor calculation. When the FFT calculation is implemented based on the decimation-in-time method, the rotation factor calculation in each calculation stage is before the DFT calculation, the input data of the rotation factor calculation is input data of the calculation stage to which the rotation factor calculation belongs, and the output data of the rotation factor calculation is input data of a corresponding DFT calculation. If it is determined that the rotation factor calculation meets a matrix operation condition, the input data of the third calculation stage may be converted into the second data matrix, and the rotation factor in the rotation factor calculation may be converted into the rotation factor matrix. In this way, the rotation factor calculation is implemented by performing the matrix operation on the second data matrix and the rotation factor matrix, to obtain input data of the DFT calculation. The input data of the DFT calculation may be converted into the first data matrix. In this way, both the DFT calculation and the rotation factor calculation in the calculation stage may be implemented through the matrix operation, thereby improving efficiency of performing the calculation stage in the FFT calculation.

In a possible implementation, the third calculation stage further includes a rotation factor calculation, and the first data matrix is a matrix converted based on the input data of the third calculation stage; and after the performing a matrix multiplication calculation on the DFT calculation matrix and the first data matrix to implement the DFT calculation, the method further includes: if a quantity of times that a same rotation factor in the rotation factor calculation participates in the calculation is greater than or equal to a first quantity threshold, determining a rotation factor matrix corresponding to each rotation factor in the rotation factor calculation; and performing the matrix multiplication calculation on a third data matrix that is obtained by performing the DFT calculation and the rotation factor matrix, to implement the rotation factor calculation.

Each third calculation stage includes the DFT calculation and the rotation factor calculation. When the FFT calculation is implemented based on a decimation-in-frequency method, the rotation factor calculation in each calculation stage is after the DFT calculation, the input data of the rotation factor calculation is output data of the DFT calculation, and the output data of the rotation factor calculation is output data of the calculation stage to which the rotation factor calculation belongs. In this way, after the output data of the DFT is obtained, if it is determined that the rotation factor calculation meets the matrix operation condition, the output data of the DFT calculation may be converted into the third data matrix, and the rotation factor in the rotation factor calculation is converted into the rotation factor matrix, so that the rotation factor calculation is implemented by performing the matrix operation on the third data matrix and the rotation factor matrix. In this way, both the DFT calculation and the rotation factor calculation in the calculation stage may be implemented through the matrix operation, thereby improving efficiency of performing the calculation stage in the FFT calculation.

The foregoing matrix operation condition may be that a quantity of times that a same rotation factor in the rotation factor calculation participates in the calculation is greater than or equal to a preset first quantity threshold. For the rotation factor calculation, if it is determined that each rotation factor in the rotation factor calculation participates in the calculation more times, it indicates that the input data of the rotation factor calculation has a plurality of data elements multiplied by each rotation factor. Therefore, a plurality of data elements corresponding to one rotation factor may form an input data vector, and input data vectors corresponding to a plurality of rotation factors may form a data matrix. The plurality of rotation factors are converted into the rotation factor matrix. In this way, the matrix multiplication calculation can be performed on the data matrix and the rotation factor matrix through the matrix operation unit, to implement the rotation factor calculation. The first quantity threshold may be preset by a skilled person.

In a possible implementation, the third calculation stage further includes a rotation factor calculation; and the performing a matrix multiplication calculation on the DFT calculation matrix and the first data matrix to implement the DFT calculation includes: determining a rotation factor matrix corresponding to each rotation factor in the rotation factor calculation; if it is determined that the rotation factor matrix and the DFT calculation matrix meet a matrix combination condition, multiplying the rotation factor matrix and the DFT calculation matrix to obtain a combined calculation matrix; and performing the matrix multiplication calculation on the combined calculation matrix and the first data matrix.

The matrix combination condition includes that a quantity of times that a same rotation factor matrix in rotation factor calculation participates in a matrix operation is greater than a preset second quantity threshold. In the calculation stage, both the DFT calculation and the rotation factor calculation may be converted into the matrix operation. If the DFT calculation and the rotation factor calculation meet the matrix combination condition, a combined operation may be performed on the DFT calculation and the matrix operation corresponding to the rotation factor calculation, that is, the rotation factor matrix and the DFT calculation matrix may be multiplied to obtain a combined calculation matrix, and the matrix multiplication calculation is performed on the combined calculation matrix and the first data matrix, to implement the rotation factor calculation and the DFT calculation in the calculation stage. In this way, combination of matrix operations is performed, which can reduce a quantity of matrix operations, and can improve efficiency of performing the DFT calculation and the rotation factor calculation.

In a possible implementation, the third calculation stage corresponds to a cardinality M, a quantity of pieces of input data of the third calculation stage is N, the third calculation stage is divided into N/M butterfly junctions based on the cardinality M, and each butterfly junction includes at least one rotation factor, where M<N, and M and N are natural numbers; and the determining a rotation factor matrix corresponding to each rotation factor in the rotation factor calculation includes: converting rotation factors of the N/M butterfly junctions into a rotation factor matrix.

Each calculation stage corresponds to a unique cardinality, and the cardinality of the calculation stage is equal to a quantity of data elements in input data corresponding to each butterfly junction in the calculation stage. Therefore, if the quantity of data elements included in the input data of the calculation stage is N, and a corresponding cardinality is M, the calculation stage includes the N/M butterfly junctions. Correspondingly, each butterfly junction needs to have at least one rotation factor. When the rotation factors are formed into a matrix, the rotation factors of the N/M butterfly junctions may be converted into at least one rotation factor matrix, so that the rotation factor calculation may be implemented by performing the matrix operation on the at least one rotation factor matrix, thereby improving efficiency of performing the rotation factor calculation. In a possible implementation, the converting rotation factors of the N/M butterfly junctions into a rotation factor matrix includes: determining at least one rotation factor set based on the rotation factors of the N/M butterfly junctions, where the at least one rotation factor set includes a same quantity of rotation factors; and for each rotation factor set, constructing the rotation factor matrix based on the rotation factors in the rotation factor set.

The rotation factors are grouped into at least one rotation factor set, and each rotation factor set includes a same quantity of rotation factors. In this way, after the rotation factors in each set are converted into rotation factor matrices, sizes of formed rotation factor matrices are the same. Further, the rotation factor calculation in each calculation stage may be implemented through the matrix operation, which can improve efficiency of performing the rotation factor calculation.

In a possible implementation, the constructing the rotation factor matrix based on the rotation factors in the rotation factor set includes: determining an element matrix corresponding to each rotation factor in the rotation factor set; and arranging the element matrix corresponding to each rotation factor diagonally, to construct the rotation factor matrix.

The rotation factor calculation includes multiplication of different rotation factors and at least one data element in the corresponding input data. If the rotation factor is separated from the real part and the imaginary part of the data element, and the calculation of the rotation factor and the data element is represented in the form of multiplication of a matrix and a vector. The obtained matrix is a rotation factor matrix corresponding to the rotation factor, and a rotation factor matrix corresponding to a rotation factor may be referred to as an element matrix. When the plurality of rotation factors form the rotation factor matrix, the element matrices corresponding to the plurality of rotation factors may be arranged diagonally, and the rotation factor matrix is constructed by padding zeros. In this way, the obtained rotation factor matrix includes a plurality of rotation factors. In this way, by performing a matrix operation on the rotation factor matrix and a corresponding data matrix, a calculation of multiplying the plurality of rotation factors by the data element can be completed, and efficiency of performing the rotation factor calculation can be improved.

In a possible implementation, the determining, based on input data of the third calculation stage, a first data matrix on which a matrix operation is performed with the DFT calculation matrix includes: determining, based on an arrangement order of data elements in the input data of the third calculation stage, at least one first data matrix of a first size formed by data elements in the input data of the third calculation stage.

To implement the matrix operation, the first size of the first data matrix is equal to a size of the DFT calculation matrix that performs the matrix operation with the first data matrix. The input data of the DFT calculation in each butterfly junction may form an input data vector. The input data vectors corresponding to the DFT calculation in the butterfly junctions may be formed into at least one first data matrix based on the arrangement order of the data elements in the input data. In this way, one first data matrix includes input data vectors corresponding to DFT calculation of a plurality of butterfly junctions. In this way, the DFT calculation in the plurality of butterfly junctions can be completed by performing the matrix operation of the first data matrix and the DFT calculation matrix once, and efficiency of performing the DFT calculation can be improved. In a possible implementation, the determining, based on an arrangement order of data elements in the input data of the third calculation stage, at least one first data matrix of a first size formed by data elements in the input data of the third calculation stage includes: determining, based on the arrangement order of the data elements in the input data of the third calculation stage and a matrix compression algorithm, the at least one first data matrix of the first size formed by the data elements in the input data of the third calculation stage.

In a process of forming the first data matrix, compression processing may be performed on the first data matrix by using the matrix compression algorithm, so that a quantity of obtained first data matrices can be reduced, and a quantity of matrix operations in the DFT calculation can be reduced, thereby improving efficiency of performing the DFT calculation.

In a possible implementation, the converting the input data of the third calculation stage into a second data matrix includes: for each rotation factor matrix, determining, based on an arrangement order of data elements corresponding to rotation factors included in the rotation factor matrix in the input data of the third calculation stage, at least one second data matrix of a second size formed by the data elements corresponding to the rotation factors included in the rotation factor matrix. To implement the matrix operation, the second size of the second data matrix is equal to a size of the rotation factor matrix of a second data matrix operation. When the second data matrix is formed, the second data matrix is formed sequentially in the arrangement order in the input data based on the data elements that are in the input data of the rotation factor calculation and that are multiplied with the rotation factor included in the rotation factor matrix. In this way, one second data matrix includes a plurality of rotation factors. In this way, calculation of the plurality of rotation factors may be completed by performing matrix operations on the second data matrix and the rotation factor matrix sequentially, thereby improving efficiency of performing rotation factor calculation. In a possible implementation, the determining, based on an arrangement order of data elements corresponding to rotation factors included in the rotation factor matrix in the input data of the third calculation stage, at least one second data matrix of a second size formed by the data elements corresponding to the rotation factors included in the rotation factor matrix includes: determining, based on the arrangement order of the data elements corresponding to the rotation factors included in the rotation factor matrix in the input data of the third calculation stage and the matrix compression algorithm, the at least one second data matrix of the second size formed by the data elements corresponding to the rotation factors included in the rotation factor matrix.

In a process of forming the second data matrix, compression processing may be performed on the second data matrix by using the matrix compression algorithm, so that a quantity of obtained second data matrices can be reduced, and a quantity of matrix operations in the rotation factor calculation can be reduced, thereby improving efficiency of performing the rotation factor calculation.

For the foregoing matrix operation performed through the matrix operation unit, efficiency of implementing the matrix operation through the matrix operation unit is higher than efficiency of implementing the matrix operation through the processor, the vector operation unit, or the like, thereby improving efficiency of performing the FFT calculation.

According to a second aspect, an apparatus for performing FFT is provided. The apparatus includes at least one module, and the at least one module is configured to implement the method for performing FFT provided in the first aspect and the possible implementations of the first aspect. According to a third aspect, a computer device for performing FFT is provided. The computer device includes a processor and a matrix operation unit. The processor is configured to perform the method provided in the first aspect and the possible implementations of the first aspect. The matrix operation unit is configured to perform the matrix multiplication calculation in the first aspect.

According to a fourth aspect, a computer-readable storage medium is provided. The computer-readable storage medium stores computer program code. When the computer program code is executed by a computer device, the computer device is enabled to perform the method for performing FFT provided in the first aspect and the possible implementations of the first aspect. According to a fifth aspect, a computer program product including instructions is provided. When the computer program product runs on a computer device, the computer device is enabled to perform the method for performing FFT provided in the first aspect and the possible implementations of the first aspect.

**BRIEF DESCRIPTION OF DRAWINGS**

FIG. 1 is a schematic diagram of a structure of a computer device according to an embodiment of this application;
FIG. 2 is a schematic diagram of a structure of a computer device according to an embodiment of this application;
FIG. 3 is a schematic diagram of performing a matrix operation by a matrix operation unit according to an embodiment of this application;
FIG. 4 is a butterfly diagram of an 8-point FFT according to an embodiment of this application;
FIG. 5 is a butterfly diagram of an 8-point FFT according to an embodiment of this application;
FIG. 6 is a schematic flowchart of a method for performing FFT according to an embodiment of this application;
FIG. 7 is a schematic flowchart of a method for performing FFT according to an embodiment of this application;
FIG. 8 is a schematic flowchart of a method for performing FFT according to an embodiment of this application;
FIG. 9 is a schematic flowchart of a method for performing FFT according to an embodiment of this application;
FIG. 10 is a schematic flowchart of a method for performing FFT according to an embodiment of this application; and
FIG. 11 is a schematic diagram of a structure of an apparatus for performing FFT according to an embodiment of this application.

**DESCRIPTION OF EMBODIMENTS**

An embodiment of this application provides a method for performing FFT. The method may be implemented by a computer device. The computer device may be an embedded device, a general-purpose computer, a server, or the like.

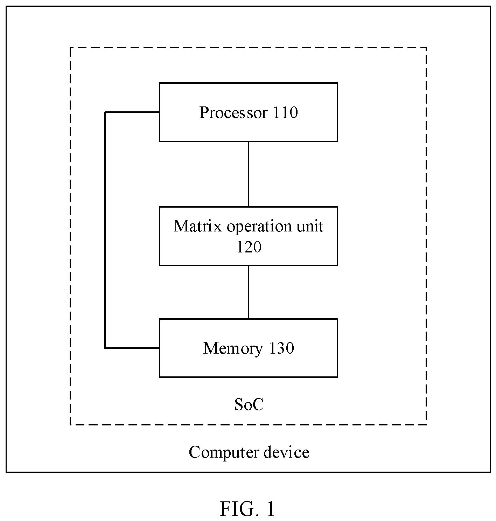

As shown in FIG. 1, in a possible case, a system on chip (System on Chip, SOC) 100 of the computer device includes a processor 110, a matrix operation unit 120, and a memory 130. The computer device may run an application program related to an FFT calculation. For example, the application program may be a large-scale atomic/molecular massively parallel simulator (Large-scale Atomic/Molecular Massively Parallel Simulator, LAMMPS) or a Vienna ab-initio simulation package (Vienna Ab-initio Simulation Package, VASP) used in the field of quantum mechanics, or may be open source field operation and manipulation (Open source Field Operation and Manipulation, OpenFOAM) software used in the field of fluid mechanics.

In a process in which the computer device shown in FIG. 1 runs the application program related to the FFT calculation, if the FFT calculation needs to be performed in the application program, the computer device may send an FFT execution request to the processor 110. The processor 110 may receive an FFT execution request sent by the application program, and then may obtain input data on which the FFT is to be performed from the memory 130, and perform FFT calculation processing on the input data on which the FFT is to be performed. If a matrix operation needs to be performed in a processing process, the processor 110 may send a matrix operation instruction to the matrix operation unit 120, where the processor 110 may be a central processing unit (central processing unit, CPU). After receiving the matrix operation instruction sent by the processor 110, the matrix operation unit 120 may obtain a matrix on which the matrix operation is to be performed from the memory 130, perform the matrix operation on the obtained matrix, and then store a matrix operation result in the memory 130. The memory 130 may be configured to store input data on which the FFT is to be performed and data generated in a process of performing the FFT calculation by the processor 110 and the matrix operation unit 120, for example, a matrix on which the matrix operation needs to be performed and a matrix operation result. The memory 130 may be a register or a cache on the SOC.

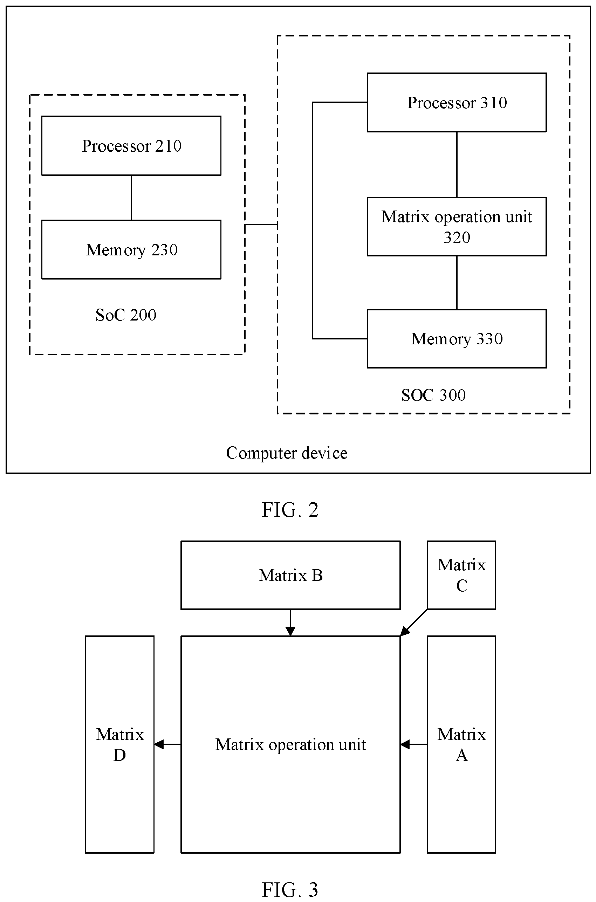

As shown in FIG. 2, in another possible case, the computer device includes at least an SOC 200 and an SOC 300. The SOC 200 includes a processor 210 and a memory 220, and the SOC 300 includes a processor 310, a memory 320, and a matrix operation unit 320.

In a process in which the computer device shown in FIG. 2 runs the application program related to the FFT calculation, the processor 210 in the SOC 200 may be configured to perform a calculation other than the FFT calculation related to the application program, and the memory 220 may store data that is to be performed in various calculations in the application program. If the FFT calculation needs to be performed in the application program, the FFT execution request may be sent to the processor 210. After receiving the FFT execution request sent by the application program, the processor 210 in the SOC 200 may forward the FFT execution request to the processor 310 in the SOC 300, and store input data on which FFT is to be performed in the memory 330. After receiving the FFT execution instruction, the processor 310 in the SOC 300 may obtain the input data on which FFT is to be performed from the memory 330, perform the FFT calculation processing on the input data on which FFT is to be performed, and send the matrix operation instruction to the matrix operation unit 320 if the matrix operation needs to be performed in the processing process. After receiving the matrix operation instruction sent by the processor 310, the matrix operation unit 320 may obtain a matrix on which the matrix operation is to be performed from the memory 330, perform the matrix operation on the obtained matrix, and then store a matrix operation result in the memory 330. The memory 330 may be configured to store the matrix on which a matrix operation is to be performed, the matrix operation result, and the like.

The matrix operation unit 120 or the matrix operation unit 320 may be a matrix operation unit implemented based on an outer product architecture, or may be a matrix operation unit implemented based on an inner product architecture. The matrix operation unit 120 or the matrix operation unit 320 may support input of at least two matrices, and perform the matrix operation on the two input matrices. In a possible implementation, the matrix operation unit 120 or the matrix operation unit 320 may support input of three matrices, and may perform multiplication and addition operations on the three input matrices. As shown in FIG. 3, the three input matrices include a matrix A, a matrix B, and a matrix C, and an output matrix is a matrix D. The matrix operation unit 120 may implement an operation of "matrix D = matrix A*matrix B + matrix C", where a size of the matrix A is N*K, a size of the matrix B is K*M, and a size of the matrix C is N*M. If only the multiplication of the matrix A and the matrix B needs to be calculated, the matrix C may be set to a 0 matrix. If only the addition of the matrix A (or the matrix B) and the matrix C needs to be calculated, the matrix A (or the matrix B) may be set to an identity matrix. For the SOC 100, the SOC 200 and the SOC 300, a scalar operation unit, a vector operation unit, and the like may further be integrated, to perform a scalar operation, a vector operation, and the like.

**The following describes related concepts in embodiments of this application.**

Discrete Fourier transform (Discrete Fourier Transform, DFT) is a discrete form of Fourier transform in both time-domain data and frequency-domain data, and is used to transform discrete time-domain sampling data into discrete frequency-domain sampling data. In a data form, input data (discrete time-domain sampling data) and output data (discrete frequency-domain data) of the DFT are complex number sequences of a finite length, and lengths of the two complex number sequences are equal.

Fast Fourier transform (Fast Fourier Transform, FFT) is a method for fast calculating DFT or DFT inverse transform. Compared with the DFT, the FFT has lower calculation complexity.

The Cooley-Tukey algorithm (Cooley-Tukey) is a common FFT algorithm. Based on a divide-and-conquer strategy, the algorithm may decompose a DFT whose length of the complex number sequence is N into DFTs whose lengths are N1 and N2 respectively and a complex multiplication with a rotation factor, where N = N1 *N2.

Radix-2 FFT (radix-2 FFT) is a classic Cooley-Tukey algorithm. The algorithm may be applied to a complex number sequence whose length is N=2L (L is a positive integer). For example, for DFT calculation (8-point DFT) whose length of the complex number sequence is 8, the DFT calculation may be first decomposed into two 4-point DFTs, and then the two 4-point DFTs are further decomposed into two 2-point DFTs.

**The following uses the radix-2 FFT as an example to further describe the Cooley-Tukey algorithm.**

It can be learned from the definition of discrete Fourier transform that, for a complex number sequence x whose length is N, a complex number sequence X whose length is N may be obtained through DFT, and a corresponding DFT calculation formula (1) is as follows:

$$X(k) = DFT[x(n)] = \sum_{n=0}^{N-1} x(n) W_N^{nk} \quad \text{formula (1)}.$$

$k \in [0, N-1]$, and $n \in [0, N-1]$. x(n) is any data element in the complex number sequence x, and X(k) is any data element in the complex number sequence X whose length is N that is obtained through DFT on the complex number sequence x. $W_N^{nk}$ is a rotation factor, and $W_N^{kn} = e^{-j(2\pi nk/N)}$. To improve the calculation efficiency of calculating the DFT, the FFT may be used to simplify the calculation process of the DFT. When the scale value of the complex number sequence x (that is, a quantity of data elements included in the complex number sequence x) $N = 2^L$, x(n) may be divided into two groups based on parity of n, to obtain the following formula (2):

$$X(k) = \sum_{\substack{n=0 \, (\text{when } n \text{ is an even number})}}^{N-1} x(n) W_N^{nk} + \sum_{\substack{n=0 \, (\text{when } n \text{ is an odd number})}}^{N-1} x(n) W_N^{nk} \quad \text{formula (2)}.$$

By using periodicity, symmetry, and the like of the rotation factor, after some series of deformations are performed on the formula (2), the following formula (3) and formula (4) may be obtained:

$$X(k) = X_1(k) + W_N^k X_2(k) \quad \text{formula (3)}.$$

$$X(k + N/2) = X_1(k) - W_N^k X_2(k) \quad \text{formula (4)}.$$

k E [0, N/2). $X_1(k)$ is a result of performing N/2-point DFT on corresponding N/2 data elements when n in x(n) is an even number, and $X_2(k)$ is a result of performing the N/2-point DFT on corresponding N/2 data elements when n in x(n) is an odd number. It can be learned from the formula (3) and the formula (4) that, only two N/2-point DFTs, that is, $X_1(k)$ and $X_2(k)$, need to be obtained, and then a complex multiplication operation and an addition operation are performed on the results of the two N/2-point DFTs, to obtain a result of the N-point DFT. Further, $X_1(k)$ and $X_2(k)$ may also be further divided based on the idea of the formula (1) to the formula (4), and a calculation result of the N/2-point DFT is obtained by calculating two N/4-point DFTs. By analogy, the N-point DFT may be divided for L times, where $N=2^L$.

The following uses 8-point FFT as an example to describe the radix-2 FFT algorithm. Calculation formulas of X(0) to X(7) may be respectively as follows:

$$X(0) = X_1(0) + W_8^0 X_2(0)$$

$$X(1) = X_1(1) + W_8^1 X_2(1)$$

$$X(2) = X_1(2) + W_8^2 X_2(2)$$

$$X(3) = X_1(3) + W_8^3 X_2(3)$$

$$X(4) = X_1(0) - W_8^0 X_2(0)$$

$$X(5) = X_1(1) - W_8^1 X_2(1)$$

$$X(6) = X_1(2) - W_8^2 X_2(2)$$

$$X(7) = X_1(3) - W_8^3 X_2(3)$$

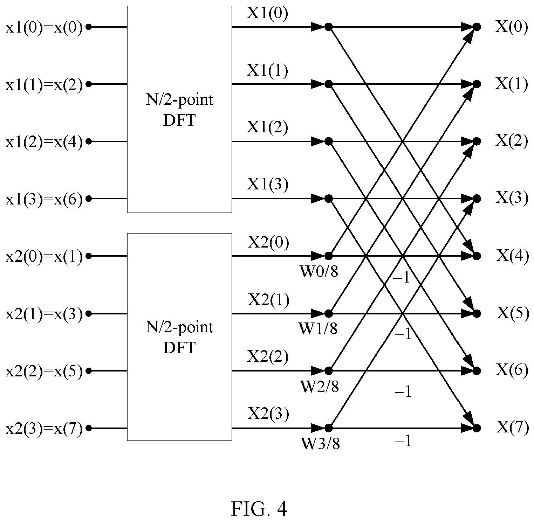

$X(0)$ to $X(7)$ is result data obtained through FFT on the input data x(0) to x(7). $X_1(0)$ to $X_1(3)$ is a result of performing the N/2-point DFT on corresponding N/2 data elements when n in x(n) is an even number, that is, obtained by performing the 4-point DFT on x(0), x(2), x(4), and x(6). $X_2(0)$ to $X_2(3)$ is a result of performing the N/2-point DFT on corresponding N/2 data elements respectively when n in x(n) is an odd number, that is, obtained by performing the 4-point DFT on x(1), x(3), x(5) and x(7). According to the foregoing formula for calculating $X(0)$ to $X(7)$, a calculation flowchart of calculating the 8-point FFT based on two 4-point DFT calculation results may be obtained, as shown in FIG. 4.

Further, the calculation result of the N/2-point DFT may also be obtained through calculation based on the calculation results of two N/4-point DFTs, that is, for $X_1(0)$ to $X_1(3)$, may be obtained through calculation of two 2-point DFTs, and for $X_2(0)$ to $X_2(3)$, may also be obtained through calculation of two 2-point DFTs. The corresponding calculation formula is as follows:

$$X_1(0) = X_3(0) + W_4^0 X_4(0)$$

$$X_1(1) = X_3(1) + W_4^2 X_4(1)$$

$$X_1(2) = X_3(0) - W_4^0 X_4(0)$$

$$X_1(3) = X_3(1) - W_4^2 X_4(1)$$

$$X_2(0) = X_5(0) + W_4^0 X_6(0)$$

$$X_2(1) = X_5(1) + W_4^2 X_6(1)$$

$$X_2(2) = X_5(0) - W_4^0 X_6(0)$$

$$X_2(3) = X_5(1) - W_4^2 X_6(1)$$

$X_3(0)$ to $X_3(1)$ is a calculation result obtained by performing 2-point DFT calculation on data elements in even-numbered bits in the sequences corresponding to x(0), x(2), x(4), and x(6), that is, a calculation result obtained by performing the DFT calculation on x(0) and x(4).

$X_4(0)$ to $X_4(1)$ is a calculation result obtained by performing 2-point DFT calculation on data elements in odd-numbered bits in the sequences corresponding to x(0), x(2), x(4), and x(6), that is, a calculation result obtained by performing the DFT calculation on x(2) and x(6).

$X_5(0)$ to $X_5(1)$ is a calculation result obtained by performing 2-point DFT calculation on data elements in even-numbered bits in the sequences corresponding to x(1), x(3), x(5), and x(7), that is, a calculation result obtained by performing the DFT calculation on x(1) and x(5).

$X_6(0)$ to $X_6(1)$ is a calculation result obtained by performing 2-point DFT calculation on data elements in odd-numbered bits in the sequences corresponding to x(1), x(3), x(5), and x(7), that is, a calculation result obtained by performing the DFT calculation on x(3) and x(7).

The two-point DFT cannot be simplified. Therefore, $X_3(0)$, $X_3(1)$, $X_4(0)$, $X_4(1)$, $X_5(0)$, $X_5(1)$, $X_6(0)$, and $X_6(1)$ may be calculated by using x(0) to x(7) respectively. Corresponding calculation formulas are as follows:

$$X_3(0) = x(0) + W_2^0 x(4)$$

$$X_3(1) = x(0) - W_2^0 x(4)$$

$$X_4(0) = x(2) + W_2^0 x(6)$$

$$X_4(1) = x(2) - W_2^0 x(6)$$

$$X_5(0) = x(1) + W_2^0 x(5)$$

$$X_5(1) = x(1) - W_2^0 x(5)$$

$$X_6(0) = x(3) + W_2^0 x(7)$$

$$X_6(1) = x(3) - W_2^0 x(7)$$

In this way, when the 8-point FFT is actually calculated, three calculation stages may be included, where:

a first calculation stage: $X_3(0)$, $X_3(1)$, $X_4(0)$, $X_4(1)$, $X_5(0)$, $X_5(1)$, $X_6(0)$, and $X_6(1)$ are calculated based on x(0) to x(7) respectively;

a second calculation stage: $X_1(0)$ to $X_1(3)$ and $X_2(0)$ to $X_2(3)$ are calculated based on $X_3(0)$, $X_3(1)$, $X_4(0)$, $X_4(1)$, $X_5(0)$, $X_5(1)$, $X_6(0)$, and $X_6(1)$; and

a third calculation stage: $X(0)$ to $X(7)$ is calculated based on $X_1(0)$ to $X_1(3)$ and $X_2(0)$ to $X_2(3)$.

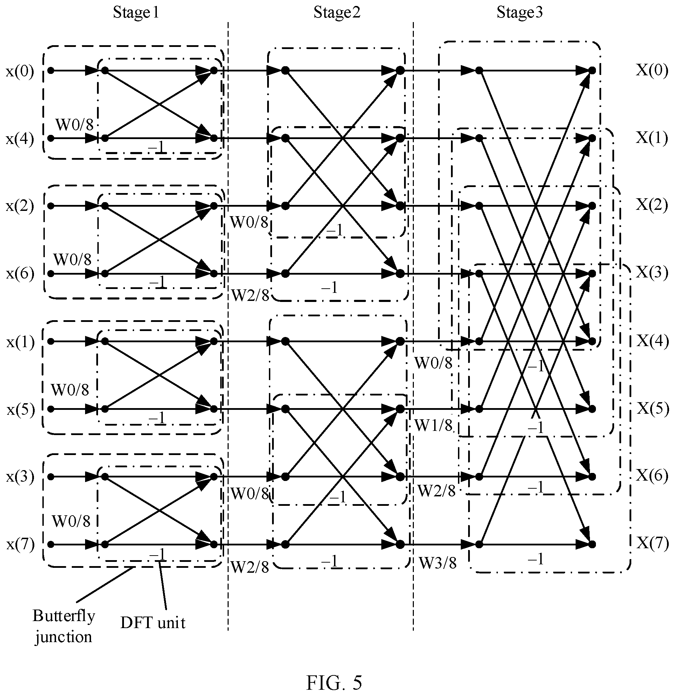

For a calculation process of the 8-point FFT, reference may be made to the butterfly diagram shown in FIG. 5. The 8-point FFT includes three calculation stages (stages), each calculation stage includes four butterfly junctions, and each butterfly junction includes a rotation factor calculation and the DFT calculation. The rotation factor calculation refers to a calculation of multiplying the input data of the calculation stage or the output data of the DFT calculation by the corresponding rotation factor. The DFT calculation refers to calculation performed on a DFT unit in a butterfly junction, that is, the DFT calculation is performed on input data of the DFT unit. Each butterfly junction includes one DFT unit. For the butterfly junction and the DFT unit, reference may be made to the first calculation stage in FIG. 5.

In addition, it should be noted that there are two extraction methods when FFT is performed, including a decimation-in-time method (Decimation-in-time, DIT) and a decimation-in-frequency method (Decimation-in-frequency, DFT). The decimation-in-time method is a method of dividing the input data for performing the DFT to implement the FFT calculation. The decimation-in-frequency method is a method of dividing the output data (that is, result data) of the DFT to implement the FFT calculation. In the FFT calculation based on the decimation-in-time method, the rotation factor calculation in the butterfly junction is performed before the DFT calculation. In the FFT calculation based on the decimation-in-frequency method, the rotation factor calculation in the butterfly junction is performed after the DFT calculation. The foregoing description of the radix-2 FFT is implemented based on a decimation-in-time method. For an 8-point FFT corresponding to decimation-in-frequency, details are not described herein again.

Regardless of whether the FFT calculation implemented based on the decimation-in-time method or the decimation-in-frequency method, for FFT calculation of N points, assuming that N may be decomposed into N1, N2, ..., and Ni, a process of calculating the FFT of N points may include i calculation stages, and each calculation stage includes a multiplication calculation of the rotation factor and the DFT calculation. N = N1*N2*...*Ni, and N1, N2, ..., and Ni may be referred to as cardinalities. N1 is the cardinality corresponding to the first calculation stage, N2 is the cardinality corresponding to the second calculation stage, and Ni is the cardinality corresponding to the $i^{th}$ calculation stage. For the $j^{th}$ calculation stage in the i calculation stages, a quantity of butterfly junctions included in the $j^{th}$ calculation stage is N/M, where M is a cardinality corresponding to the $j^{th}$ calculation stage. Values of rotation factors in each calculation stage may be obtained through calculation based on the quantity N of data elements included in the input data and the sequence of the current calculation stage, where M<N, and M and N are natural numbers.

It can be seen that any FFT calculation may be divided into several calculation stages, and each calculation stage may include the rotation factor calculation and the DFT calculation. In the FFT calculation implemented based on the decimation-in-time method, the rotation factor calculation may be performed before the DFT calculation in the same calculation stage, and the calculation result corresponding to the rotation factor calculation is the input data of the DFT calculation. In the FFT calculation implemented based on the decimation-in-frequency method, the DFT calculation may be performed before the rotation factor calculation in the same calculation stage, and the calculation result corresponding to the DFT calculation is the input data of the rotation factor calculation.

**The following describes an execution principle of embodiments of this application.**

According to the method for performing FFT provided in this application, calculations in calculation stages in FFT may be converted into matrix calculations. A method for implementing FFT calculation through a matrix operation is provided in software, and the FFT calculation may be implemented in hardware through an SOC including the matrix operation unit.

It can be known from the foregoing description of the radix-2 FFT that, for the calculation of the 8-point DFT, the 8-point DFT may be divided into two 4-point DFTs, and then the two 4-point DFTs are divided into two 2-point DFTs respectively. For the specific calculation process, refer to FIG. 5. In this way, the calculation of the 8-point DFT may be divided into three calculation stages (stages), and each calculation stage includes the rotation factor calculation and the DFT calculation. (1) Convert the DFT calculation into the matrix operation.

As shown in FIG. 5, the calculation of the 8-point DFT may be divided into three calculation stages, each calculation stage includes four butterfly junctions, and each butterfly junction includes one DFT unit. Assuming that input of any DFT unit is $x[0]$, $x[1]$ and an output is $X[0]$, $X[1]$, a corresponding calculation formula may be the following formula (5) and formula (6):

$$X[0] = x[0] + x[1] \quad \text{formula (5)}$$

$$X[1] = x[0] - x[1] \quad \text{formula (6)}.$$

A format of converting the foregoing formula (5) and formula (6) into a matrix multiplication vector may be the following formula (7):

$$\begin{bmatrix} X[0] \\ X[1] \end{bmatrix} = \begin{bmatrix} 1 & 1 \\ 1 & -1 \end{bmatrix} * \begin{bmatrix} x[0] \\ x[1] \end{bmatrix} \quad \text{formula (7)}.$$

In the DFT, both input data and output data are complex numbers, that is, X[0], X[1], $x[0]$, and $x[1]$ are all complex numbers, and a real number and the complex number are separately stored in a computer device. If a real part and an imaginary part ofX[0], X[1], $x[0]$, and $x[1]$ are calculated separately, the foregoing matrix multiplication vector formula may be written as the following formula (8):

$$\begin{bmatrix} X[0].r \\ X[0].i \\ X[1].r \\ X[1].i \end{bmatrix} = \begin{bmatrix} 1 & 0 & 1 & 0 \\ 0 & 1 & 0 & 1 \\ 1 & 0 & -1 & 0 \\ 0 & 1 & 0 & -1 \end{bmatrix} * \begin{bmatrix} x[0].r \\ x[0].i \\ x[1].r \\ x[1].i \end{bmatrix} \quad \text{formula (8)}.$$

X[0]. $r$ represents the real part of X[0], X[0].$i$ represents the imaginary part of X[0]; X[1].$r$ represents the real part of X[1], X[1].$i$ represents the imaginary part of X[1]; x[0].$r$ represents the real part of x[0], x[0].$i$ represents the imaginary part of x[0], x[1].$r$ represents the real part of x[1], and x[1].$i$ represents the imaginary part of x[1].

In the foregoing formula (8), no variable related to the input data exists in the matrix multiplied by input data vectors formed by the input data, that is, the matrix does not change with different input data. That is, for the 2-point DFT calculation in any calculation stage, the real part and the imaginary part of the input data may be separated to form the input data vectors, and a product of the matrix and the input data vectors is determined as the output of the 2-point DFT calculation. The matrix may be referred to as a DFT calculation matrix.

Similarly, a 3-point DFT calculation, a 4-point DFT calculation, a 5-point DFT calculation, and the like in the calculation stage all correspond to a unique DFT calculation matrix, and an inference process is not enumerated herein.

In addition, because the DFT calculation matrices corresponding to the DFT calculations included in the same calculation stage of the FFT are the same, for example, each calculation stage of the 8-point FFT includes four 2-point DFT calculations. Therefore, matrix multiplication vector calculation corresponding to each DFT calculation in the same calculation stage may be combined into a matrix multiplication matrix calculation.

Still, the calculation stage in the 8-point FFT is used as an example, assuming that input vectors corresponding to four 2-point DFT calculations are $\begin{bmatrix} x[0].r \\ x[0].i \\ x[4].r \\ x[4].i \end{bmatrix}$, $\begin{bmatrix} x[2].r \\ x[2].i \\ x[6].r \\ x[6].i \end{bmatrix}$, $\begin{bmatrix} x[1].r \\ x[1].i \\ x[5].r \\ x[5].i \end{bmatrix}$, and $\begin{bmatrix} X[3].r \\ X[3].i \\ X[7].r \\ X[7].i \end{bmatrix}$ respectively, the calculation of the four 2-point DFT calculation matrix multiplication vectors may be combined into one matrix multiplication matrix calculation, as shown in the following formula (9):

$$\begin{bmatrix} X[0].r & X[2].r & X[1].r & X[3].r \\ X[0].i & X[2].i & X[1].i & X[3].i \\ X[4].r & X[6].r & X[5].r & X[7].r \\ X[4].i & X[6].i & X[5].i & X[7].i \end{bmatrix} = \begin{bmatrix} 1 & 0 & 1 & 0 \\ 0 & 1 & 0 & 1 \\ 1 & 0 & -1 & 0 \\ 0 & 1 & 0 & -1 \end{bmatrix} \cdot \begin{bmatrix} x[0].r & x[2].r & x[1].r & x[3].r \\ x[0].i & x[2].i & x[1].i & x[3].i \\ x[4].r & x[6].r & x[5].r & x[7].r \\ x[4].i & x[6].i & x[5].i & x[7].i \end{bmatrix}$$

formula (9).

By analogy, for any calculation stage in any FFT process, DFT calculation may be converted into the matrix operation.
(2) Convert the rotation factor calculation into the matrix operation.
Each calculation stage in the FFT further includes a multiplication operation of the rotation factor. The multiplication operation of the rotation factor may be represented as y = W*x, where W is the rotation factor, x is a data element multiplied by the rotation factor, and y is a calculation result. If the real part and the imaginary part of x, y, and W are separated, y = W*x may be represented as the following formula (10):

$$y.r + j * y.i = (W.r + j * W.i) * (x.r + j * x.i) \quad \text{formula (10)}.$$

If the foregoing formula is converted into a form of matrix multiplication vector, y = W*x may be represented as formula (11):

$$\begin{bmatrix} y.r \\ y.i \end{bmatrix} = \begin{bmatrix} W.r & -W.i \\ W.i & W.r \end{bmatrix} \cdot \begin{bmatrix} x.r \\ x.i \end{bmatrix} \quad \text{formula (11)}.$$

According to the formula (11), it can be seen that any rotation factor may be represented by a 2x2 matrix, where the matrix may be referred to as a rotation factor matrix, and a matrix converted by a rotation factor may also be referred to as an element matrix. *W.r* represents the real part of the rotation factor W, and *W.i* represents the imaginary part of the rotation factor W. *x.r* represents the real part of the data element on which the multiplication operation is performed with the rotation factor W, and *x.i* represents the imaginary part of the data element. *y.r* represents the real part of the result data obtained through rotation factor calculation, and *y.i* represents the imaginary part of the result data. In this way, any rotation factor calculation may be converted into a matrix multiplication vector operation.
It is assumed that in a rotation factor calculation, two data elements are multiplied with a same rotation factor W, and are respectively corresponding to x1 and x2. According to formula (11), it may be obtained that the multiplication operation of the rotation factor W with $y_1$ and $y_2$ respectively may be represented as the following formula (12) and formula (13):

$$\begin{bmatrix} y1.r \\ y1.i \end{bmatrix} = \begin{bmatrix} W.r & -W.i \\ W.i & W.r \end{bmatrix} \cdot \begin{bmatrix} x1.r \\ x1.i \end{bmatrix} \quad \text{formula (12)}$$

$$\begin{bmatrix} y2.r \\ y2.i \end{bmatrix} = \begin{bmatrix} W.r & -W.i \\ W.i & W.r \end{bmatrix} \cdot \begin{bmatrix} x2.r \\ x2.i \end{bmatrix} \quad \text{formula (13)}.$$

The foregoing formula (12) and formula (13) may be combined into one matrix multiplication calculation, as shown in the following formula (14):

$$\begin{bmatrix} y2.r & y1.r \\ y2.i & y1.i \end{bmatrix} = \begin{bmatrix} W.r & -W.i \\ W.i & W.r \end{bmatrix} \cdot \begin{bmatrix} x2.r & x1.r \\ x2.i & x1.i \end{bmatrix} \quad \text{formula (14)}.$$

Further, it is assumed that the rotation factor needs to be calculated 4 times in the same calculation stage, and each calculation of the rotation factor corresponds to a different rotation factor, which may be respectively represented as:

$$\begin{bmatrix} y0.r \\ y0.i \end{bmatrix} = \begin{bmatrix} W0.r & -W0.i \\ W0.i & W0.r \end{bmatrix} \cdot \begin{bmatrix} x0.r \\ x0.i \end{bmatrix}$$

$$\begin{bmatrix} y1.r \\ y1.i \end{bmatrix} = \begin{bmatrix} W1.r & -W1.i \\ W1.i & W1.r \end{bmatrix} \cdot \begin{bmatrix} x1.r \\ x1.i \end{bmatrix}$$

$$\begin{bmatrix} y2.r \\ y2.i \end{bmatrix} = \begin{bmatrix} W2.r & -W2.i \\ W2.i & W2.r \end{bmatrix} \cdot \begin{bmatrix} x2.r \\ x2.i \end{bmatrix}$$

$$\begin{bmatrix} y3.r \\ y3.i \end{bmatrix} = \begin{bmatrix} W3.r & -W3.i \\ W3.i & W3.r \end{bmatrix} \cdot \begin{bmatrix} x3.r \\ x3.i \end{bmatrix}$$

The foregoing 4 matrix multiplication vector operations are combined into one matrix multiplication vector operation, as shown in the following formula (15):

$$\begin{bmatrix} y_0.r \\ y_0.i \\ y_1.r \\ y_1.i \\ y_2.r \\ y_2.i \\ y_3.r \\ y_3.i \end{bmatrix} = \begin{bmatrix} W_0.r & -W_0.i & 0 & 0 & 0 & 0 & 0 & 0 \\ W_0.i & W_0.r & 0 & 0 & 0 & 0 & 0 & 0 \\ 0 & 0 & W_1.r & -W_1.i & 0 & 0 & 0 & 0 \\ 0 & 0 & W_1.i & W_1.r & 0 & 0 & 0 & 0 \\ 0 & 0 & 0 & 0 & W_2.r & -W_2.i & 0 & 0 \\ 0 & 0 & 0 & 0 & W_2.i & W_2.r & 0 & 0 \\ 0 & 0 & 0 & 0 & 0 & 0 & W_3.r & -W_3.i \\ 0 & 0 & 0 & 0 & 0 & 0 & W_3.i & W_3.r \end{bmatrix} \cdot \begin{bmatrix} x_0.r \\ x_0.i \\ x_1.r \\ x_1.i \\ x_2.r \\ x_2.i \\ x_3.r \\ x_3.i \end{bmatrix}$$

formula (15).

A matrix formed by element matrices corresponding to the at least one rotation factor may be referred to as the rotation factor matrix.

If 32 times of rotation factor calculations need to be performed in the same calculation stage, and there are 4 rotation factors in total in the calculation stage, each rotation factor participates in 8 times of the rotation factor calculations. That is, there are 8 times of matrix multiplication vector operations similar to the formula (15), and a corresponding rotation factor matrix is the same in each calculation. Therefore, the 8 times of matrix multiplication vector operations may be combined into one matrix multiplication matrix operation, as shown in the following formula (16):

$$\begin{bmatrix} y_{28}.r & y_{24}.r & y_{20}.r & y_{16}.r & y_{12}.r & y_8.r & y_4.r & y_0.r \\ y_{28}.i & y_{24}.i & y_{20}.i & y_{16}.i & y_{12}.i & y_8.i & y_4.i & y_0.i \\ y_{29}.r & y_{25}.r & y_{21}.r & y_{17}.r & y_{13}.r & y_9.r & y_5.r & y_1.r \\ y_{29}.i & y_{25}.i & y_{21}.i & y_{17}.i & y_{13}.i & y_9.i & y_5.i & y_1.i \\ y_{30}.r & y_{26}.r & y_{22}.r & y_{18}.r & y_{14}.r & y_{10}.r & y_6.r & y_2.r \\ y_{30}.i & y_{26}.i & y_{22}.i & y_{18}.i & y_{14}.i & y_{10}.i & y_6.i & y_2.i \\ y_{31}.r & y_{27}.r & y_{23}.r & y_{19}.r & y_{15}.r & y_{11}.r & y_7.r & y_3.r \\ y_{31}.i & y_{27}.i & y_{23}.i & y_{19}.i & y_{15}.i & y_{11}.i & y_7.i & y_3.i \end{bmatrix} =$$

$$\begin{bmatrix} W_0.r & -W_0.i & 0 & 0 & 0 & 0 & 0 & 0 \\ W_0.i & W_0.r & 0 & 0 & 0 & 0 & 0 & 0 \\ 0 & 0 & W_1.r & -W_1.i & 0 & 0 & 0 & 0 \\ 0 & 0 & W_1.i & W_1.r & 0 & 0 & 0 & 0 \\ 0 & 0 & 0 & 0 & W_2.r & -W_2.i & 0 & 0 \\ 0 & 0 & 0 & 0 & W_2.i & W_2.r & 0 & 0 \\ 0 & 0 & 0 & 0 & 0 & 0 & W_3.r & -W_3.i \\ 0 & 0 & 0 & 0 & 0 & 0 & W_3.i & W_3.r \end{bmatrix} \cdot \begin{bmatrix} x_{28}.r & x_{24}.r & x_{20}.r & x_{16}.r & x_{12}.r & x_8.r & x_4.r & x_0.r \\ x_{28}.i & x_{24}.i & x_{20}.i & x_{16}.i & x_{12}.i & x_8.i & x_4.i & x_0.i \\ x_{29}.r & x_{25}.r & x_{21}.r & x_{17}.r & x_{13}.r & x_9.r & x_5.r & x_1.r \\ x_{29}.i & x_{25}.i & x_{21}.i & x_{17}.i & x_{13}.i & x_9.i & x_5.i & x_1.i \\ x_{30}.r & x_{26}.r & x_{22}.r & x_{18}.r & x_{14}.r & x_{10}.r & x_6.r & x_2.r \\ x_{30}.i & x_{26}.i & x_{22}.i & x_{18}.i & x_{14}.i & x_{10}.i & x_6.i & x_2.i \\ x_{31}.r & x_{27}.r & x_{23}.r & x_{19}.r & x_{15}.r & x_{11}.r & x_7.r & x_3.r \\ x_{31}.i & x_{27}.i & x_{23}.i & x_{19}.i & x_{15}.i & x_{11}.i & x_7.i & x_3.i \end{bmatrix}$$

formula (16).

$x_1.r$ to $x_{31}.r$ is the real part of the data element that is multiplied by each of the 4 rotation factors, and $x_1.i$ to $x_{31}.i$ is the imaginary part of the data element that is multiplied by each of the 4 rotation factors respectively.

It can be learned from the foregoing reasoning that, for any calculation stage in any FFT process, if the same rotation factor participates in a plurality of multiplication operations of the rotation factor in the calculation stage, the rotation factor multiplication in the calculation stage may be converted into the matrix multiplication calculation.

**The following starts to describe a method for performing FFT provided in an embodiment of this application.**

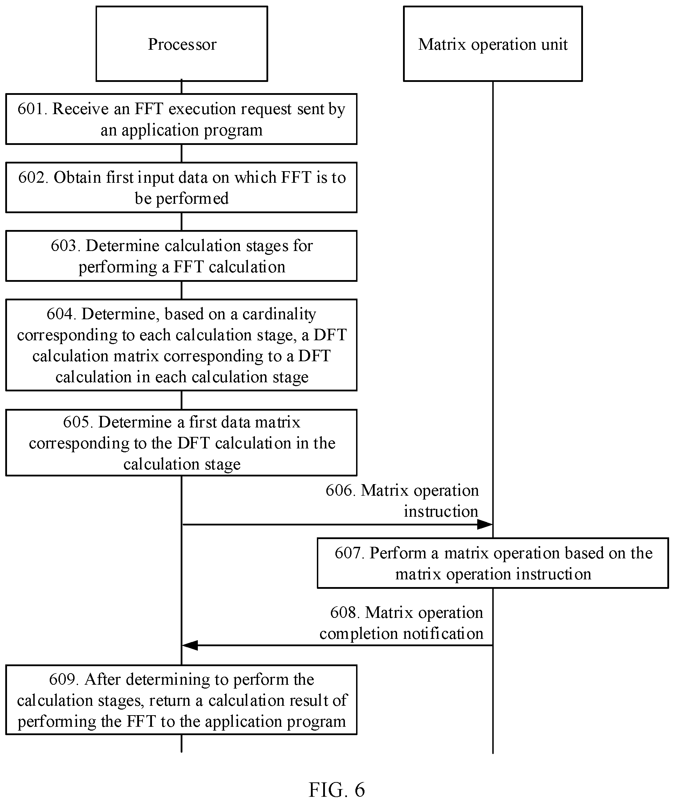

FIG. 6 is a flowchart of a method for performing FFT according to an embodiment of this application. The method embodiment may be performed in the computer device provided in FIG. 1 or FIG. 2. Refer to FIG. 6. The method includes the following steps.

Step 601: A processor receives an FFT execution request sent by an application program.

The application program may be the foregoing application program related to the FFT calculation. In a process in which the computer device in FIG. 1 or FIG. 2 runs the application program, when the FFT calculation needs to be performed on data in the application program, the FFT execution request may be sent to the processor in the computer device. For example, the application program may be a VASP. When a wave function needs to be solved in the VASP, a wave function solving request may be sent to the processor, where the wave function solving request is the FFT execution request. The wave function is a common function in the field of quantum mechanics. The wave function may be solved by performing the FFT calculation on input data of the wave function, to obtain a solving result of the wave function.

For the method for performing FFT provided in this application, a person skilled in the art may write a corresponding processing program as an FFT processing function, and add the FFT processing function to a mathematical library of the application program. The mathematical library may be stored in the computer device that executes a corresponding application program, and includes a large quantity of processing functions. The processing functions may be used to implement various mathematical calculations in the application program. When the application program needs to perform the FFT calculation, the FFT execution request may be sent to the processor, and then the processor may invoke and execute the FFT processing function to implement processing of the following steps.

Step 602: The processor obtains first input data on which the FFT is to be performed.

The first input data is input data on which the FFT calculation needs to be performed and that is indicated by the FFT execution request. For example, when the FFT execution request is the wave function solving request, the first input data may be initial data of the wave function.

After receiving the FFT execution request sent by the application program, the processor may load, based on the FFT execution request, the first input data on which FFT is to be performed and that is stored in the memory of the computer device to the memory of the SOC. For example, the memory may be a cache of the SOC, to further process the first input data.

Step 603: The processor determines calculation stages for performing the FFT calculation.

When quantities of data elements in the input data on which the FFT calculation needs to be performed are different, when the FFT calculation is performed on the input data, quantities of included calculation stages may be different, and a cardinality corresponding to each calculation stage may also be different. Therefore, before the FFT calculation is performed on the input data, the FFT calculation may be decomposed into a plurality of calculation stages based on the quantity of data elements included in the input data, and the cardinality corresponding to each calculation stage is determined.

In a possible case, a user may set, in the application program based on the quantity of data elements included in the input data on which the FFT calculation needs to be performed, a quantity of calculation stages and the cardinality corresponding to each calculation stage when the FFT calculation is performed on the input data. In this way, the FFT execution request may carry the cardinalities of the calculation stages set by the user, and the processor further divides the calculation stages of the FFT calculation based on the cardinalities of the calculation stages set by the user. A product of the cardinalities corresponding to the set calculation stages is equal to the quantity of data elements included in the input data.

In another possible case, the FFT execution request sent by the application program may carry the quantity of data elements included in the input data, or the processor may calculate the quantity of data elements included in the input data. After determining the quantity of data elements included in the input data, the processor may determine, based on the Cooley-Tukey algorithm, the calculation stages in which FFT calculation is performed on the input data and the cardinalities corresponding to the calculation stages. For example, when the quantity of data elements in the input data is 8, 8 may be decomposed into 2*2*2. In this case, a process of performing the FFT on the input data includes three calculation stages, and the cardinalities corresponding to the calculation stages are 2. For example, when the quantity of data elements in the input data is 27, 27 may be decomposed into 3*3*3. In this case, a process of performing the FFT on the input data includes three calculation stages, and the cardinalities corresponding to the calculation stages are 3. For another example, when the scale value of the input data is 30, 30 may be decomposed into 2*3*5. In this case, a process of performing the FFT on the input data includes three calculation stages, and the cardinalities corresponding to the calculation stages may be 2, 3, and 5 respectively. Step 604: The processor determines, based on the cardinality corresponding to each calculation stage, a DFT calculation matrix corresponding to a DFT calculation in each calculation stage.

In a possible case, the DFT calculation matrix corresponding to the DFT calculation in any calculation stage is related to the cardinality of the calculation stage. Therefore, a person skilled in the art may preset a correspondence between a cardinality and a DFT calculation matrix, for example, the DFT calculation matrix corresponding to the cardinality of 2, the DFT calculation matrix corresponding to the cardinality of 3, and the DFT calculation matrix corresponding to the cardinality of 4. After the cardinalities corresponding to the calculation stages are determined, for the DFT calculation matrix corresponding to the DFT calculation, the cardinality corresponding to the calculation stage to which the DFT calculation belongs may be determined, and the correspondence between the cardinality and the DFT calculation matrix may be determined, to determine the DFT calculation matrix corresponding to the DFT calculation.

In another possible case, the processor may determine a DFT coefficient based on the cardinality corresponding to the calculation stage to which the DFT calculation belongs, and then convert the DFT coefficient into the DFT calculation matrix. In the FFT calculation, the DFT calculation in each calculation stage is formed by a group of calculation formulas for performing complex number addition and complex number multiplication on the input data. After the cardinality corresponding to the calculation stage to which the DFT calculation belongs is determined, the group of calculation formulas may be determined. For details, reference may be made to the foregoing description of the execution principle. The DFT coefficient is a coefficient of each input data in the group of calculation formulas. The real part and the imaginary part of the complex number in the group of calculation formulas may be separated, and the group of calculation formulas is represented in a form of multiplying a matrix by a vector, where an obtained matrix is the DFT calculation matrix.

Step 605: The processor determines a first data matrix corresponding to the DFT calculation in the calculation stage.

The input data of the first calculation stage in the calculation stages of the FFT calculation is input data on which the FFT is to be performed. For other calculation stages except the first calculation stage, input data of each calculation stage is output data of a previous calculation stage. The output data of the last calculation stage is result data obtained through FFT on the input data on which FFT is to be performed. After the DFT calculation matrix corresponding to the DFT calculation in the calculation stages is determined, the DFT calculation and the rotation factor calculation in the calculation stages may be performed in sequence based on the sequence of the calculation stages and the input data corresponding to the calculation stages.

If the FFT calculation in the method flow is implemented based on the decimation-in-time method, the rotation factor calculation in the calculation stage is before the DFT calculation, that is, for any calculation stage, the rotation factor calculation may be performed on the input data of the calculation stage first, and then the calculation result of the rotation factor calculation may be used as the input data of the DFT calculation. The DFT calculation is performed on the input data of the DFT calculation, and the obtained calculation result of the DFT calculation is the output data of the calculation stage.

If the FFT is implemented based on decimation-in-frequency in the method flow, the rotation factor calculation in the calculation stage is after the DFT calculation, that is, for any calculation stage, the rotation factor calculation may be performed on the input data of the calculation stage first, and then the calculation result of the rotation factor calculation may be used as the input data of the DFT calculation. The DFT calculation is performed on the input data of the DFT calculation, and the obtained calculation result of the DFT calculation is the output data of the calculation stage. In a possible case, values of the rotation factors in the rotation factor calculation may be all 1. When the values of the rotation factors in the rotation factor calculation are all 1, the rotation factor calculation may not be performed, and the input data corresponding to the rotation factor calculation may be directly used as the output data corresponding to the rotation factor calculation. In this step, when performing the DFT calculation, the processor may convert the input data corresponding to the DFT calculation into at least one first data matrix, and specific processing thereof is not described herein. In addition, in the method flow, the rotation factor calculation may also be performed, and the multiplication operation may be performed on the data elements in the input data corresponding to the rotation factor based on the vector operation unit or the scalar operation unit, to obtain a calculation result of the rotation factor calculation. The calculation of the rotation factor based on the vector operation unit or the scalar operation unit belongs to the current technologies, and is not described in detail herein. When the rotation factor calculation is performed in the method flow, the rotation factor calculation may be further converted into the matrix calculation, and the rotation factor calculation is implemented through the matrix operation unit. Processing of implementing the rotation factor calculation through the matrix operation unit is not described herein.

Step 606: The processor sends a matrix operation instruction to the matrix operation unit.

After converting the input data corresponding to the DFT calculation into the at least one first data matrix, the processor may send the matrix operation instruction to the matrix operation unit, and may sequentially store the first data matrix and the DFT calculation matrix into a register corresponding to the matrix operation unit, so that the matrix operation unit performs the matrix multiplication calculation on the first data matrix and the DFT calculation matrix.

Step 607: The matrix operation unit performs a matrix operation based on the matrix operation instruction.

After receiving the matrix operation instruction, the matrix operation unit may sequentially obtain the first data matrix and the DFT calculation matrix from the register, and perform the matrix multiplication calculation on the first data matrix and the DFT calculation matrix to obtain a calculation result of the DFT calculation.

Step 608: Perform the matrix operation, and send a matrix operation completion notification to the processor.

After performing the matrix operation, the matrix operation unit may store the calculation result in the register corresponding to the matrix operation unit, and send the matrix operation completion notification to the processor.

Step 609: After determining to perform the calculation stages, the processor returns a calculation result of performing the FFT to the application program.

After receiving the matrix operation completion instruction sent by the matrix operation unit, the processor may obtain, from the register corresponding to the matrix operation unit, a result matrix corresponding to the DFT calculation, and then the data elements included in the result matrix may be the output data for performing the DFT calculation. If it is determined that all calculation stages of the FFT calculation have been completed, the FFT calculation result may be returned to the application program. For example, the application program may be the VASP, and a corresponding calculation result is a result of performing the FFT calculation on the initial data of the wave function.

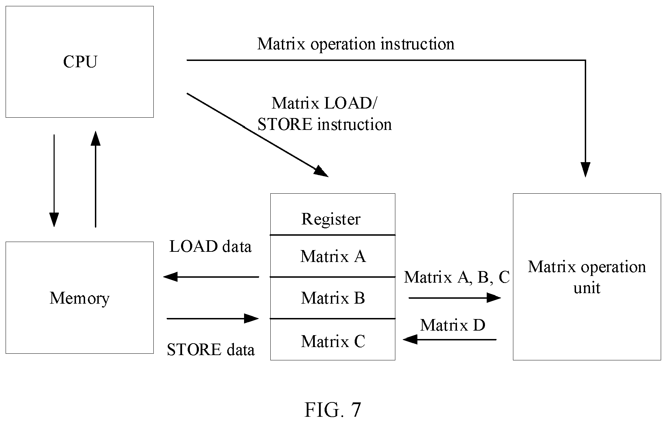

If it is determined that the processing in all the calculation stages of the FFT calculation is not completed currently, the rotation factor calculation in the current calculation stage or a calculation in the next calculation stage may continue to be performed based on the obtained calculation result of the DFT calculation. As shown in FIG. 7, FIG. 7 is a schematic flowchart of performing a matrix operation by a processor and a matrix operation unit in this application. In a process of performing the matrix operation, the processor may obtain, from the memory, input data on which a matrix operation needs to be performed, for example, first input data on which an FFT calculation is to be performed, convert the input data into a data matrix, and then send a matrix LOAD (load) instruction to the register corresponding to the matrix operation unit, to store the data matrix and the calculation matrix (for example, the DFT calculation matrix) in the memory in the register. For example, a matrix A and a matrix B in FIG. 7 are two to-be-computed matrices. The matrix calculation implemented by the matrix operation unit is as follows: Matrix D = matrix A * matrix B + matrix C. Therefore, if the matrix A* matrix B needs to be implemented, the matrix C may be set to a 0 matrix. Then, the matrix operation instruction may be sent to the matrix operation unit, so that the matrix operation unit loads the matrices A, B, and C from the register, to implement an operation of the matrix D= matrix A* matrix B+ matrix C. The matrix operation unit may store the obtained calculation result (that is, the matrix D) in the register, and send a matrix operation completion notification to the processor. Then, the processor may send a matrix STORE (storage) instruction to the register, to store the obtained matrix D in the memory. The CPU may load the data elements in the matrix D from the memory, to form a data matrix of a next matrix operation, and control the matrix operation unit to perform the matrix operation again until the processor determines to complete processing of the calculation stages of the FFT calculation. After determining that processing of the calculation stages of the FFT calculation is completed, the processor may return a result of performing the FFT calculation to the application program.

In this embodiment of this application, in a process in which the processor performs the FFT calculation, the DFT calculation in the calculation stages may be converted into the matrix operation, and the matrix operation is implemented through the matrix operation unit. In this way, the DFT calculation on a plurality of data elements in the first data matrix can be completed by performing one matrix operation, thereby improving efficiency of performing the DFT calculation in the calculation stages, and further improving efficiency of performing the FFT calculation.

In a possible implementation, in step 605, processing in which the processor converts the input data of the DFT calculation into the first data matrix is as follows: determining, based on an arrangement order of data elements in the input data corresponding to the DFT calculation, at least one first data matrix of a first size formed by the input data corresponding to the DFT calculation. The first data matrix is a data matrix on which a matrix operation is performed with the DFT calculation matrix. To implement the matrix operation, a first size of the formed first data matrix may be the same as a size of the DFT calculation matrix. The input data of the DFT calculation may be obtained by storing the output data of the previous calculation stage or the output data of the rotation factor calculation of the same calculation stage. The data elements in the input data of the DFT calculation that is obtained through sorting may be sorted based on a sequence of DFT units in the DFT calculation. For example, if one DFT unit corresponds to input of N data elements, in the input data of the DFT calculation, the first N data elements are data elements corresponding to a first DFT unit, the $(N+1)^{th}$ to the $(2N)^{th}$ elements correspondingly are data elements corresponding to a second DFT unit, and the $(mN+1)^{th}$ to the $[(m+1)N]^{th}$ data elements are data elements corresponding to a $(m+1)^{th}$ DFT unit. Sorting the output data of the previous calculation stage or the output data of the rotation factor calculation of the same calculation stage belongs to the current technologies, and may be implemented through an FFT algorithm, which is not described in detail herein.

A size of the DFT calculation matrix is related to the cardinality corresponding to the calculation stage to which the DFT calculation matrix belongs. When the cardinality is N, a data element in the input data of each corresponding DFT unit is N, and a size of the DFT calculation matrix is $2N \times 2N$. The real part and the imaginary part of the data element in the input data of the DFT unit are separated, to obtain an input data vector whose quantity of data elements is 2N. Therefore, input data corresponding to every 2N DFT units in the DFT calculation may be used to sequentially form a first data matrix of $2N \times 2N$. If a case in which the quantity p of DFT units is less than 2N exists, input data vectors of the p DFT units may be used to form a matrix of $2N \times p$, and then the first data matrix of $2N \times 2N$ is obtained by padding zeros.

A 256-point FFT is used as an example, the 256-point FFT may include four calculation stages, and a cardinality corresponding to each calculation stage is 4, that is, 256 = 4*4*4*4. For any DFT calculation in the four calculation stages, 64 4-point DFT units are included. A DFT calculation matrix corresponding to the 4-point DFT unit is an $8 \times 8$ matrix. Input of the 4-point DFT unit is 4 data elements. After real parts and imaginary parts of the four data elements are separated, a vector having 8 data elements may be formed. That is, the calculation of each 4-point DFT unit may be converted into multiplication of an $8 \times 8$ DFT calculation matrix and an input data vector including 8 data elements. Because the DFT calculation matrices corresponding to the 64 4-point DFT units are the same, the input data vectors respectively corresponding to the 64 DFT units may be combined into 8 first data matrices in sequence.

In this way, the input data corresponding to the DFT calculation is converted into the first data matrix, and then the matrix operation unit separately performs the matrix multiplication calculation on each first data matrix and the corresponding DFT calculation matrix, thereby improving efficiency of performing the DFT calculation in the calculation stages.

In another possible case, the processing that the processor determines the DFT calculation matrix corresponding to the DFT calculation in each calculation stage in step 604 may further be as follows: The processor may simplify the DFT calculation based on a maximum matrix size supported by a single matrix operation performed by the matrix operation unit. For example, when the maximum matrix size supported by the single matrix operation performed by the matrix operation unit is $2N \times 2N$, and the DFT calculation in the calculation stage is an N+1-point DFT calculation, the N+1-point DFT calculation may be simplified into an N-point DFT calculation. For example, when the DFT unit is a 5-point DFT, and the maximum matrix size supported by the single matrix operation performed by the matrix operation unit is $8 \times 8$, the 5-point DFT may be converted into a 4-point DFT for calculation based on a Winograd fast Fourier algorithm. If the 5-point DFT is directly calculated, the matrix operation unit can only split a 10x10 DFT calculation matrix and a data matrix corresponding to the 5-point DFT into a plurality of matrices of a smaller size for calculation. If the 5-point DFT is simplified into the 4-point DFT for calculation, the matrix operation unit is needed to calculate only one matrix operation corresponding to a matrix whose size is $8 \times 8$ to obtain result data corresponding to the 5-point DFT. A DFT calculation matrix corresponding to the simplified 5-point DFT may be pre-stored by a skilled person. A data matrix corresponding to the DFT calculation matrix may be obtained based on the Winograd fast Fourier algorithm.

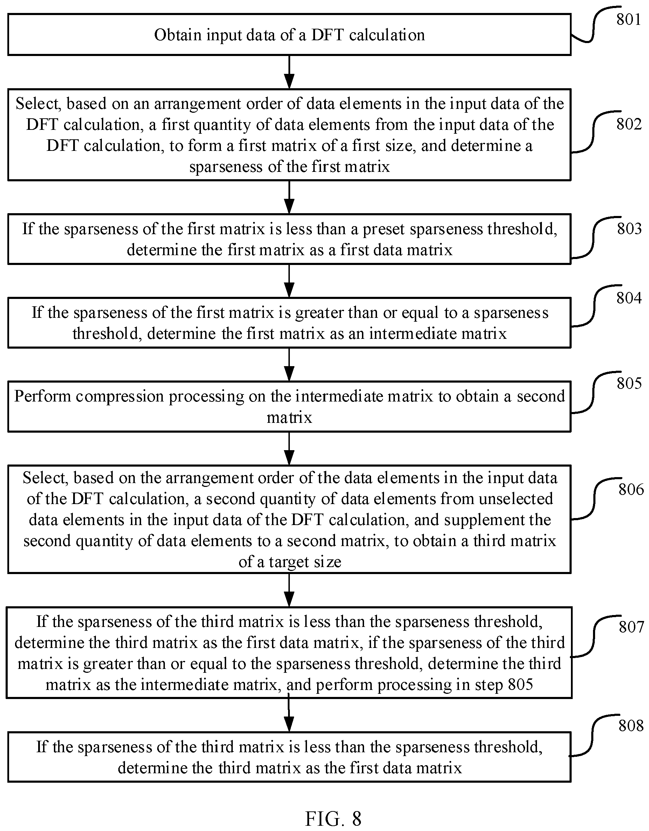

In this embodiment of this application, in a process of performing the FFT calculation by the processor, the DFT calculation in the calculation stages of the FFT calculation may be converted into the matrix operation, and a corresponding matrix operation is performed through the matrix operation unit, so that calculation efficiency of performing the FFT calculation can be improved. FIG. 8 is a flowchart of a method for converting input data of DFT calculation into a first data matrix. A matrix compression algorithm is included in the method. A processor performs compression processing on a matrix formed by the input data, so that a quantity of formed first data matrices can be reduced, thereby reducing times of matrix operations. Corresponding processing is as follows.

Step 801: Obtain input data of a DFT calculation.

Step 802: Select, based on an arrangement order of data elements in the input data of the DFT calculation, a first quantity of data elements from the input data of the DFT calculation, to form a first matrix of a first size, and determine a sparseness degree of the first matrix.

A first quantity is one half of the quantity of data elements included in the first data matrix of the first size.

After the first quantity of data elements are obtained, real parts and imaginary parts of the first quantity of data elements may form the first matrix. After the first matrix is formed, the sparseness of the first matrix may be detected. For the sparseness, a proportion of data elements whose values are 0 in the first matrix in each row of data elements may be determined, and a lowest proportion corresponding to each row is determined as the sparseness of the first matrix.

Step 803: If the sparseness of the first matrix is less than a preset sparseness threshold, determine the first matrix as a first data matrix.

The sparseness threshold may be preset by a skilled person. For example, the sparseness threshold may be 50%, 75%, or the like. If it is determined that the sparseness of the first matrix is less than the preset sparseness threshold, matrix compression processing may not be performed on the first matrix, and the first matrix is directly determined as the first data matrix.

Step 804: If the sparseness of the first matrix is greater than or equal to a sparseness threshold, determine the first matrix as an intermediate matrix.

Step 805: Perform compression processing on the intermediate matrix to obtain a second matrix. If the sparseness of the first matrix is greater than or equal to the preset sparseness threshold, the first matrix may be determined as the intermediate matrix, and the compression processing is performed on the intermediate matrix. The compression processing refers to removing some data elements whose values are 0 and that are included in the intermediate matrix. For example, when a sparseness indicator value is 50%, a value 0 of 50% in the first matrix may be removed. If the size of the first matrix is $8 \times 8$, after compression is performed by row, a size of an obtained second matrix after compression processing is $4 \times 8$.

Step 806: Select, based on the arrangement order of the data elements in the input data of the DFT calculation, a second quantity of data elements from unselected data elements in the input data of the DFT calculation, and supplement the second quantity of data elements to a second matrix, to obtain a third matrix of a target size.

The second quantity is equal to one half of a difference between the quantity of data elements corresponding to the first data matrix and the quantity of data elements corresponding to the second matrix. After the second matrix is obtained through compression processing, the data element may be added to the second matrix again. For example, if the size of the second matrix obtained through compression processing is $5 \times 8$, the quantity of included data elements is 40, the size of the first data matrix is $8 \times 8$, and the quantity of the included data elements is 64, it may be determined that the second quantity is 12.

After the real parts and the imaginary parts of the second quantity of data elements are supplemented to the second matrix, the third matrix of the target size may be obtained.

It should be noted that, if the quantity of unselected data elements in the input data of the DFT calculation is less than the second quantity, all the unselected data elements may be supplemented to the second matrix, zero-padding processing is performed on the second matrix to obtain a fourth matrix whose size is the same as that of the first data matrix, and the fourth matrix is determined as the first data matrix.

Step 807: If the sparseness of the third matrix is greater than or equal to the sparseness threshold, determine the third matrix as the intermediate matrix, and perform processing in step 805.

After the third matrix is formed, the sparseness of the third matrix may be detected. If the sparseness of the third matrix is still greater than or equal to the sparseness threshold, it indicates that the third matrix may be further compressed. Therefore, the third matrix may be used as the intermediate matrix again, and the processing in step 805 is performed again, to perform the compression processing on the intermediate matrix.

Step 808: If the sparseness of the third matrix is less than the sparseness threshold, determine the third matrix as the first data matrix.

If the sparseness of the third matrix is less than the sparseness threshold, the third matrix may be determined as the first data matrix.

It should be noted that, in a process of performing step 801 to step 808, each time after the first data matrix is determined, if data elements that are not formed into the first data matrix still exist in the DFT calculation, a first quantity of data elements may be selected again from the data elements that are not selected in order to form the first matrix of the first size, and step 803 is performed. If the quantity of unselected data elements in the input data of the DFT calculation is less than the first quantity, the remaining unselected data elements may be used to form a fifth matrix that is the same as the first data matrix in a manner of padding zeros, and then the fifth matrix is determined as the first data matrix.

In addition, for the first data matrix obtained through compression processing, a position matrix corresponding to the first data matrix may be further generated. The position matrix includes position information of each data element in the corresponding first data matrix in a matrix before being compressed. When the matrix operation is performed on the first data matrix obtained through compression processing and the corresponding DFT calculation matrix, an output data matrix obtained through matrix multiplication calculation on the first data matrix and the corresponding DFT calculation matrix may be determined based on the position matrix corresponding to the first data matrix, and then DFT calculation result data is obtained based on the output data matrix.

In this way, when the input data corresponding to the DFT calculation includes a large quantity of data elements whose values are 0, the matrix compression processing may be performed to reduce the sparseness of the first data matrix, reduce the quantity of first data matrices, and reduce the quantity of matrix operations performed when the DFT calculation is performed, thereby improving efficiency of performing the DFT calculation.

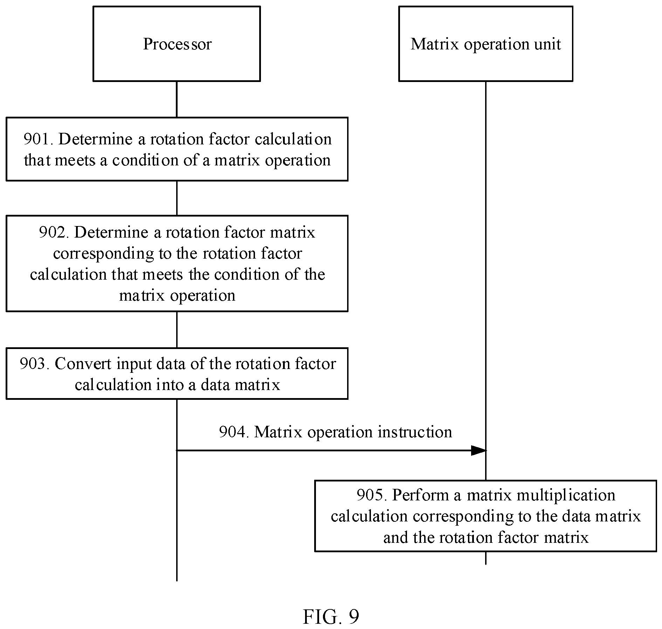

FIG. 9 is a flowchart of a method for implementing a rotation factor calculation through a matrix operation according to an embodiment of this application. Refer to FIG. 9. The method includes the following steps.

Step 901: A processor determines a rotation factor calculation that meets a condition of a matrix operation.

It can be known from the content of the foregoing execution principle that, when the quantity of times that the rotation factor in the rotation factor calculation participates in the rotation factor calculation is large, the rotation factor calculation may be converted into the matrix operation. Therefore, before the calculation stages are performed, the quantity of times that the rotation factor in the rotation factor calculation of each calculation stage participates in the rotation factor calculation may be determined. If the quantity of times that the same rotation factor in the rotation factor calculation participates in the calculation is greater than or equal to the first quantity threshold, it indicates that the rotation factor calculation meets the condition of the matrix operation.

For example, there are four 64-point DFTs in a second calculation stage of the 256-point FFT implemented based on decimation-in-frequency. In each 64-point DFT, 64 different rotation factors participate in the multiplication operation of the rotation factors. However, because there are four 64-point DFTs, one rotation factor may participate in 4 multiplication operations of the rotation factor. If the first quantity threshold is set to 4, it may be determined that the rotation factor calculation in the second calculation stage meets the matrix operation condition.

Step 902: The processor determines a rotation factor matrix corresponding to the rotation factor calculation that meets the condition of the matrix operation.

In a possible implementation, after a quantity of data elements in input data is determined, a quantity of calculation stages in a corresponding FFT calculation, cardinalities corresponding to the calculation stages, and the rotation factor are determined accordingly. Therefore, in actual processing, a correspondence between a quantity of corresponding data elements and the rotation factor matrix of the calculation stages may be pre-stored. In the implementation, after the quantity of data elements in the input data is determined, a corresponding rotation factor matrix of the rotation factor calculation in each calculation stage in the FFT calculation may be determined based on the foregoing correspondence.

In another possible implementation, after the rotation factor calculation that meets the condition of the matrix operation is determined, the rotation factor in the rotation factor calculation that meets the condition of the matrix operation may be converted into the rotation factor matrix. Before the rotation factor is converted into the rotation factor matrix, a quantity of rotation factors included in each rotation factor matrix may be determined based on a size of the rotation factor matrix.

A size of the rotation factor matrix may be preset by a skilled person. For example, the size of the rotation factor matrix may be set to a size of a DFT calculation matrix corresponding to a same calculation stage. Alternatively, to improve efficiency of performing the matrix operation on the rotation factor matrix and the corresponding data matrix, the size of the rotation factor matrix may be set to a size of a maximum matrix supported by a single matrix operation performed by the matrix operation unit.

It can be known from the content of the foregoing execution principle that, a rotation factor may be converted into a 2x2 rotation factor matrix, and the rotation factor matrix may also be referred to as an element matrix. When the rotation factor matrix is converted from a plurality of rotation factors, element matrices respectively corresponding to the plurality of rotation factors may be arranged diagonally, and the rotation factor matrix is formed by padding zeros. In this way, N rotation factors may be converted into a rotation factor matrix with a size of $2N \times 2N$.

In this way, a target quantity of the rotation factors forming each rotation factor matrix may be determined based on a specified size of the rotation factor matrix. In this way, the plurality of rotation factors included in the rotation factor calculation are divided into at least one rotation factor set, and each rotation factor set includes the target quantity of rotation factors. Then, the rotation factor in each rotation factor set may be converted into a corresponding element matrix, the element matrices respectively corresponding to the plurality of rotation factors are arranged diagonally, and the rotation factor matrix is formed by padding zeros.

Step 903: When the rotation factor calculation is performed through the matrix operation, convert input data of the rotation factor calculation into a data matrix.

When the FFT algorithm is implemented based on the decimation-in-time method, the input data corresponding to the rotation factor calculation is input data of a calculation stage to which the rotation factor calculation belongs. In this case, the data matrix converted from the input data corresponding to the rotation factor calculation may be referred to as a second data matrix. When the FFT algorithm is implemented based on decimation-in-frequency, the input data corresponding to the rotation factor calculation is output data of the DFT calculation in the same calculation stage. In this case, the data matrix converted from the input data corresponding to the rotation factor calculation may be referred to as a third data matrix. To implement the matrix operation between the second data matrix or the third data matrix and the rotation factor matrix, a second size of the second data matrix or the third data matrix is equal to the size of the rotation factor matrix, that is, the size of the second data matrix or the third data matrix is the same as the size of the corresponding rotation factor matrix.

For processing of converting the input data of the rotation factor calculation into the second data matrix or the third data matrix, a data element that is obtained from the input data of the rotation factor calculation and that performs a multiplication operation with the rotation factors forming the rotation factor matrix may be obtained, and the second data matrix or the third data matrix is constructed in sequence based on a sequence of the obtained data elements in the input data. The following uses an example in which the input data corresponding to the rotation factor calculation is converted into the second data matrix for description. Processing of converting the input data corresponding to the rotation factor calculation into the third data matrix is the same as that of the second data matrix, and details are not described again.

A rotation factor matrix is formed by the element matrix of one or more rotation factors. If each rotation factor matrix in the rotation factor calculation is formed by an element matrix corresponding to a rotation factor, the second data matrix corresponding to the rotation factor matrix may be formed by data elements multiplied by the rotation factor respectively. Because the size of the rotation factor matrix is $2\times2$, the second data matrix having the same size as the rotation factor matrix may be formed by using real parts and imaginary parts of two data elements. Therefore, for each rotation factor matrix, a data element that performs the multiplication operation with the rotation factors constituting the rotation factor matrix may be obtained, and based on an order of the obtained data elements in the input data, the second data matrix is formed in pairs.

If the rotation factor matrices in the rotation factor matrix calculation are formed by the element matrices corresponding to the plurality of rotation factors, the second data matrix corresponding to the rotation factor matrix may be respectively formed by data elements for performing the multiplication operation on the rotation factors that constitute the rotation factor matrix. Assuming that the rotation factor matrix is formed by N rotation factors, a size of the formed rotation factor matrix is $2N\times2N$. For any rotation factor forming the rotation factor matrix, 2N data elements that are obtained by performing the multiplication operation with the rotation factor may be obtained, and a second data matrix with a size of $2N\times2N$ is formed by using real parts and imaginary parts of the 2N data elements corresponding to the N rotation factors.

Therefore, for each rotation factor matrix, a data element that performs the multiplication operation with the rotation factors constituting the rotation factor matrix may be obtained separately. Based on a position of the element matrix corresponding to each rotation factor in the rotation factor matrix, positions of real parts and imaginary parts of the 2N data elements that perform the multiplication operation with the rotation factor in the formed second data matrix are determined. For example, if the element matrix of the rotation factor is in the first two rows of the rotation factor matrix, the real part and the imaginary part of the data element corresponding to the rotation factor are respectively in the first row and the second row of the second data matrix. The real part and the imaginary part of each piece of input data are in a same column, and real parts or imaginary parts of data elements in a same row may be arranged based on the order of the data elements in the input data. If the quantity of data elements corresponding to the rotation factor is less than 2N, the data elements corresponding to the rotation factor in the rotation factor matrix may be formed into the second data matrix with a size of $2N\times2N$ in the manner of padding zeros.

For example, element matrices corresponding to the rotation factors $W_0$, $W_1$, $W_2$, and $W_3$ respectively form the following rotation factor matrices:

$$\begin{bmatrix} W_0.r & -W_0.i & 0 & 0 & 0 & 0 & 0 & 0 \\ W_0.i & W_0.r & 0 & 0 & 0 & 0 & 0 & 0 \\ 0 & 0 & W_1.r & -W_1.i & 0 & 0 & 0 & 0 \\ 0 & 0 & W_1.i & W_1.r & 0 & 0 & 0 & 0 \\ 0 & 0 & 0 & 0 & W_2.r & -W_2.i & 0 & 0 \\ 0 & 0 & 0 & 0 & W_2.i & W_2.r & 0 & 0 \\ 0 & 0 & 0 & 0 & 0 & 0 & W_3.r & -W_3.i \\ 0 & 0 & 0 & 0 & 0 & 0 & W_3.i & W_3.r \end{bmatrix}$$

$W_0.r$ is the real part of $W_0$, $W_0.i$ is the imaginary part of $W_0$, $W_1.r$ is the real part of $W_1$, $W_1.i$ is the imaginary part of $W_1$, $W_2.r$ is the real part of $W_2$, $W_2.i$ is the imaginary part of $W_2$, $W_3.r$ is a real part of $W_3$, and $W_3.i$ is the imaginary part of $W_3$.

It is assumed that 8 data elements are obtained by performing the multiplication operation on each rotation factor in the rotation factors $W_0$, $W_1$, $W_2$, and $W_3$. In this case, the real part and the imaginary part of each rotation factor may be separated, and the position of the data element corresponding to each rotation factor in the second data matrix is determined based on the position of the rotation factor in the rotation factor matrix. For example, if the element matrix corresponding to the rotation factor $W_0$ is in the first row and the second row of the rotation factor matrix, the real part and the imaginary part of the data element corresponding to the rotation factor $W_0$ may be respectively in the first row and the second row of the data matrix. Therefore, when the multiplication operation is performed on the rotation factor matrix and the second data matrix, the real part and the imaginary part of the data element corresponding to the rotation factor $W_0$ may be respectively multiplied by the element matrix corresponding to the rotation factor $W_0$. In this way, the second data matrix formed by the foregoing rotation factor matrix is as follows:

$$\begin{bmatrix} x_7.r & x_6.r & x_5.r & x_4.r & x_3.r & x_2.r & x_1.r & x_0.r \\ x_7.i & x_6.i & x_5.i & x_4.i & x_3.i & x_2.i & x_1.i & x_0.i \\ x_{15}.r & x_{14}.r & x_{13}.r & x_{12}.r & x_{11}.r & x_{10}.r & x_9.r & x_8.r \\ x_{15}.i & x_{14}.i & x_{13}.i & x_{12}.i & x_{11}.i & x_{10}.i & x_9.i & x_8.i \\ x_{23}.r & x_{22}.r & x_{21}.r & x_{20}.r & x_{19}.r & x_{18}.r & x_{17}.r & x_{16}.r \\ x_{23}.i & x_{22}.i & x_{21}.i & x_{20}.i & x_{19}.i & x_{18}.i & x_{17}.i & x_{16}.i \\ x_{31}.r & x_{30}.r & x_{29}.r & x_{28}.r & x_{27}.r & x_{26}.r & x_{25}.r & x_{24}.r \\ x_{31}.i & x_{30}.i & x_{29}.i & x_{28}.i & x_{27}.i & x_{26}.i & x_{25}.i & x_{24}.i \end{bmatrix}$$

$x_0.r$ to $x_7.r$ are the real part of the data elements corresponding to $W_0$, $x_0.i$ to $x_7.i$ are the imaginary part of the data elements corresponding to $W_0$. $x_8.r$ to $x_{15}.r$ are the real part of the data elements corresponding to $W_1$, $x_8.i$ to $x_{15}.i$ are the imaginary part of the data elements corresponding to $W_1$. $x_{16}.r$ to $x_{23}.r$ are the real part of the data elements corresponding to $W_2$, $x_{16}.i$ to $x_{23}.i$ are the imaginary part of the data elements corresponding to $W_3$, $x_{24}.r$ to $x_{31}.r$ are the real part of the data elements corresponding to $W_3$, and $x_{24}.i$ to $x_{31}.i$ are the imaginary part of the data elements corresponding to $W_0$.

In a possible case, the second data matrix or the third data matrix may be generated based on the matrix compression algorithm. For further processing, refer to the processing shown in FIG. 8. Details are not described herein again. In this way, in a process of forming the second data matrix or the third data matrix, compression processing is performed on the second data matrix or the third data matrix by using the matrix compression algorithm, which can reduce the quantity of obtained second data matrices or third data matrices, reduce the quantity of matrix operations, and further improve efficiency of performing the DFT calculation.

Step 904: The processor sends a matrix operation instruction to the matrix operation unit.

After obtaining the data matrix and the rotation factor matrix, the processor may store the data matrix and the rotation factor matrix to the register corresponding to the matrix operation unit, and send the matrix operation instruction to the matrix operation unit.

Step 905: The matrix operation unit performs a matrix multiplication calculation corresponding to the data matrix and the rotation factor matrix.

After receiving the matrix operation instruction sent by the processor, the matrix operation unit may obtain the second data matrix and the rotation factor matrix from the register, perform the matrix multiplication calculation on the data matrix and the rotation factor matrix, and store a calculation result in the register. Then, the processor may obtain the calculation result stored in the register, to obtain a result of performing the rotation factor calculation. Further, subsequent processing may be performed, for example, the calculation result of the rotation factor is converted into a data matrix of a next DFT calculation.

In this embodiment of this application, in a process of performing the FFT calculation by the processor, a selected rotation factor calculation in the calculation stages of the FFT calculation may be converted into the matrix operation, and a corresponding matrix operation is performed through the matrix operation unit, so that calculation efficiency of performing the FFT calculation can be improved.

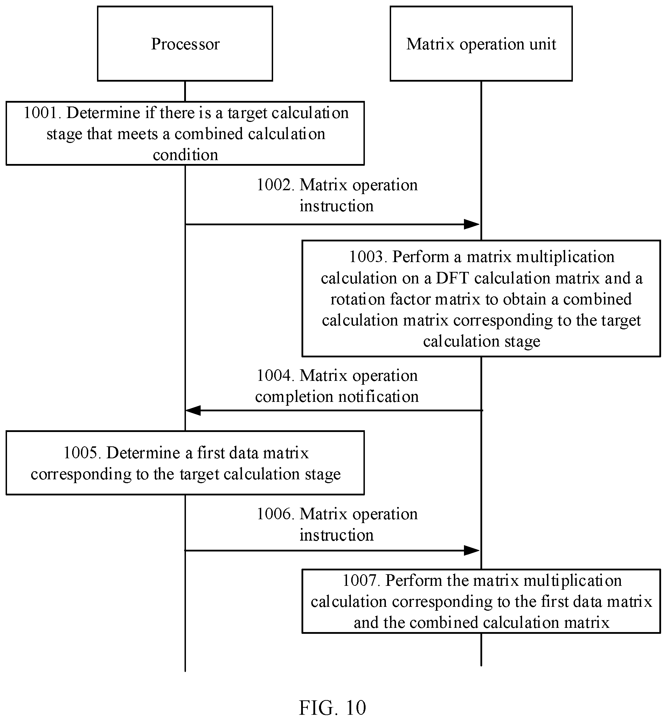

FIG. 10 shows a method for performing a combined calculation on a DFT calculation and a rotation factor calculation according to an embodiment of this application. Refer to FIG. 10. The method includes the following steps.

Step 1001: A processor determines if there is a target calculation stage that meets a combined calculation condition in the calculation stages.

In a calculation stage, if matrix multiplication calculation is performed only on one rotation factor matrix and one third data matrix in the rotation factor calculation, and the matrix multiplication calculation is performed on one DFT calculation matrix that is at least included in the DFT calculation and the first data matrix, the calculation stage may be performed by using the following calculation formula:

$$\text{output data matrix} = \text{rotation factor matrix} \times \text{DFT calculation matrix} \times \text{first data matrix}.$$

For the foregoing formula, the "rotation factor matrix*DFT calculation matrix" may be calculated first, and a corresponding calculation result may be referred to as a combined calculation matrix, or referred to as a butterfly junction calculation matrix. Therefore, for the calculation stage to which the rotation factor calculation belongs, the calculation may be performed through the following two calculation formulas:

$$\text{butterfly junction calculation matrix} = \text{rotation factor matrix} \times \text{DFT calculation matrix}$$

$$\text{output data matrix} = \text{butterfly junction calculation matrix} \times \text{first data matrix}.$$

If a plurality of rotation factor matrices participate in the matrix operation in the rotation factor calculation, a plurality of butterfly junction calculation matrices need to be calculated in a corresponding calculation stage, and a plurality of output data matrices are calculated based on the plurality of butterfly junction calculation matrices. Assuming that N rotation factor matrices participate in the matrix transportation calculation, N butterfly junction calculation matrices and N output data matrices need to be calculated. In this way, 2N times of matrix multiplication calculations need to be performed. However, if the N rotation factor matrices participating in the matrix operation are the same, and there is only one DFT matrix in each calculation stage, the calculation of the butterfly junction calculation matrix needs to be performed only once, and then the N output data matrices are calculated based on the obtained butterfly junction calculation matrix and the N first data matrices. In this way, only N+1 times of matrix operations need to be performed. If m rotation factor matrices in N rotation factor matrices that participate in the matrix operation respectively participate in q times of matrix operations, where N=m*q, in this case, only q butterfly junction calculation matrices need to be calculated, and then N output data matrices are calculated based on the q butterfly junction calculation matrices respectively. In this way, only N+q times of matrix operations need to be performed.

It is clear that, when the quantity of times that the same rotation factor matrix participates in matrix operations is greater, the butterfly junction calculation matrix is calculated first, and then the DFT calculation and the rotation factor calculation in the corresponding calculation stage are combined for calculation, which can reduce the quantity of times that matrix operations need to be performed in the calculation of the same calculation stage and improve efficiency of performing the FFT. Therefore, before each calculation stage is started to be performed, the quantity of times that a same rotation factor matrix corresponding to the rotation factor calculation participates in the matrix operation in the calculation stages may be determined. If the quantity of times that a same rotation factor matrix needs to participate in the matrix operation is greater than the preset second quantity threshold, it may be determined that the calculation stage meets the combined calculation condition.

The quantity of times that the rotation factor matrix participates in the matrix operation may be determined based on the quantity of times that a same rotation factor participates in the multiplication operation in the corresponding rotation factor calculation and the size of the rotation factor matrix. If the quantity of times that the rotation factor participates in the multiplication operation is X, the size of the rotation factor matrix is $Y \times Y$. In this case, the quantity of times that the rotation factor matrix participates in the matrix operation may be Y/X. It should be noted that, a prerequisite for combining the rotation factor calculation and the DFT calculation is that the rotation factor matrix and the DFT calculation matrix in the same calculation stage have the same matrix size.

Step 1002: The processor sends a matrix operation instruction to the matrix operation unit.

After determining the target calculation stage that can meet the combined calculation condition, the processor may separately store the DFT calculation matrix and the rotation factor matrix that correspond to the target calculation matrix into the register corresponding to the matrix operation unit, and send the matrix operation instruction to the matrix operation unit.

Step 1003: The matrix operation unit performs a matrix multiplication calculation on the DFT calculation matrix and the rotation factor matrix to obtain a combined calculation matrix corresponding to the target calculation stage.

After receiving the matrix operation instruction, the matrix operation unit may obtain the DFT calculation matrix and the rotation factor matrix from the register, and perform the matrix multiplication calculation on the DFT calculation matrix and the rotation factor matrix to obtain the combined calculation matrix corresponding to the target calculation stage.

Step 1004: The matrix operation unit sends a matrix operation completion notification to the processor.

After obtaining the combined calculation matrix through the calculation, the matrix operation unit may store the combined calculation matrix in the register, and send the matrix operation completion notification to the processor.

Step 1003 and step 1004 may be performed for a plurality of times, to obtain at least one combined calculation matrix in the target calculation stage.

Step 1005: The processor determines a first data matrix corresponding to the target calculation stage.

When performing the target calculation stage, the processor may directly convert input data of the target calculation stage into the first data matrix, and then perform the matrix multiplication on the first data matrix and the combined calculation matrix, and perform the combined calculation on the DFT calculation and the rotation factor calculation, to obtain output data of the target calculation stage.

The first data matrix corresponding to the combined calculation matrix corresponding to the target calculation stage may be generated with reference to the foregoing method for generating the second data matrix or the third data matrix corresponding to the rotation factor matrix.

Step 1006: The processor sends a matrix operation instruction to the matrix operation unit.

After obtaining the first data matrix and the rotation factor matrix, the processor may store the first data matrix and the combined calculation matrix to the memory, and send the matrix operation instruction to the matrix operation unit.

Step 1007: The matrix operation unit performs a matrix multiplication calculation corresponding to the first data matrix and the combined calculation matrix.

After receiving the matrix operation instruction sent by the processor, the matrix operation unit may obtain the first data matrix and the combined calculation matrix from the register, perform the matrix multiplication calculation on the first data matrix and the combined calculation matrix, and store a calculation result in the register. Then, the processor may obtain the calculation result stored in the register, to obtain a result of performing the combined calculation. Further, subsequent processing may be performed, for example, a result of the combined calculation is converted into input data of a next calculation stage.

In this embodiment of this application, in a process of performing the FFT calculation by the processor, the DFT calculation and the rotation factor calculation in the calculation stages of the FFT calculation are combined and calculated by using a matrix, so that a quantity of matrix operations can be reduced, and calculation efficiency of performing the FFT calculation can be improved. It should be understood that the FFT execution methods provided in embodiments of this application are also applicable to inverse fast Fourier transform (Inverse Fast Fourier Transform, IFFT). An implementation principle and a calculation procedure of IFFT calculation are consistent with an implementation principle and a calculation procedure of the FFT calculation, and details are not described in this application.

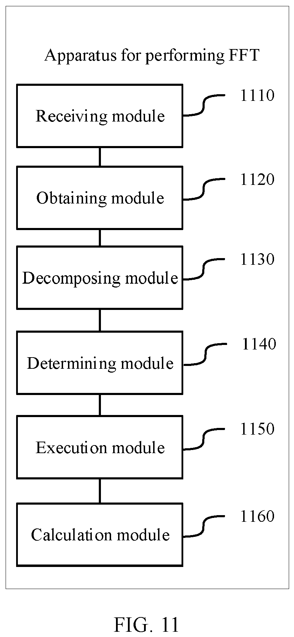

Based on a same technical concept, an embodiment of this application further provides an apparatus for performing FFT. The apparatus may be the computer device in the foregoing embodiment. Refer to FIG. 11. The apparatus includes a receiving module 1110, an obtaining module 1120, a decomposing module 1130, a determining module 1140, an execution module 1150, and a calculation module 1160.

The receiving module 1110 is configured to receive a fast Fourier transformation FFT execution request sent by an application program. Specifically, the foregoing mentioned receiving function and other implicit steps may be implemented.

The obtaining module 1120 is configured to obtain first input data on which an FFT calculation needs to be performed and that is indicated by the FFT execution request. Specifically, the foregoing obtaining function and other implicit steps may be implemented.

The decomposing module 1130 is configured to decompose the FFT calculation into a plurality of calculation stages based on a cardinality of the FFT calculation, where input data of a first calculation stage in the plurality of calculation stages is first input data, input data of a second calculation stage after the first calculation stage is output data of a previous calculation stage of the second calculation stage, a third calculation stage in the plurality of calculation stages includes a DFT calculation, and the third calculation stage is any calculation stage of the plurality of calculation stages. Specifically, the foregoing decomposing function and other implicit steps may be implemented.

The determining module 1140 is configured to determine a DFT calculation matrix corresponding to the DFT calculation in the third calculation stage. Specifically, the foregoing determining function and other implicit steps may be implemented.

The execution module 1150 is configured to determine, based on input data of the third calculation stage when a calculation in the third calculation stage is performed, a first data matrix on which a matrix operation is performed with the DFT calculation matrix. Specifically, the foregoing execution function and other implicit steps may be implemented.

The calculation module 1160 is configured to perform a matrix multiplication calculation on the DFT calculation matrix and the first data matrix to implement the DFT calculation, and return a calculation result to the application program after the plurality of calculation stages are completed. Specifically, the foregoing calculation function and other implicit steps may be implemented.

In a possible implementation, the determining module 1140 is configured to determine, based on a cardinality corresponding to the third calculation stage and a preset correspondence between a cardinality and a DFT calculation matrix, the DFT calculation matrix corresponding to the DFT calculation in the third calculation stage.

In a possible implementation, the determining module 1140 is configured to convert a DFT coefficient corresponding to the DFT calculation in the third calculation stage into the DFT calculation matrix.

In a possible implementation, the calculation module 1160 is configured to: perform the rotation factor calculation of the data matrix based on a rotation factor corresponding to the rotation factor in the third calculation stage of the data matrix and the input data of the third calculation stage of the data matrix, to obtain input data of the DFT calculation of the data matrix.

The execution module 1150 is configured to convert the input data of the DFT calculation of the data matrix into the first data matrix on which the matrix operation is performed with the DFT calculation matrix of the data matrix.

In a possible implementation, the execution module 1150 is configured to: if a quantity of times that a same rotation factor in the rotation factor calculation of the data matrix participates in the calculation is greater than or equal to a first quantity threshold, determine a rotation factor matrix corresponding to each rotation factor in the rotation factor calculation of the data matrix; and convert the input data of the third calculation stage of the data matrix into a second data matrix. The calculation module 1160 is configured to: perform the matrix multiplication calculation on the rotation factor matrix of the data matrix and the second data matrix of the data matrix to implement the rotation factor calculation of the data matrix, to obtain the first data matrix of the data matrix. In a possible implementation, the third calculation stage further includes a rotation factor calculation, and the first data matrix of the data matrix is a matrix converted based on the input data of the third calculation stage of the data matrix.

The execution module 1150 is further configured to: if a quantity of times that a same rotation factor in the rotation factor calculation of the data matrix participates in the calculation is greater than or equal to a first quantity threshold, determine a rotation factor matrix corresponding to each rotation factor in the rotation factor calculation of the data matrix.

The calculation module 1160 is configured to: perform the matrix multiplication calculation on a third data matrix that is obtained by performing the DFT calculation of the data matrix and the data matrix rotation factor matrix, to implement the rotation factor calculation of the data matrix. In a possible implementation, the third calculation stage of the data matrix further includes a rotation factor calculation.

The execution module 1150 is configured to: determine a rotation factor matrix corresponding to each rotation factors in the rotation factor calculation of the data matrix; and if it is determined that the rotation factor matrix of the data matrix and the DFT calculation matrix of the data matrix meet a matrix combination condition, multiply the rotation factor matrix of the data matrix and the DFT calculation matrix of the data matrix to obtain a combined calculation matrix.

The calculation module 1160 is configured to: perform the matrix multiplication calculation on the combined calculation matrix of the data matrix and the first data matrix of the data matrix.

In a possible implementation, the third calculation stage of the data matrix corresponds to a cardinality M, a quantity of pieces of input data of the third calculation stage of the data matrix is N, the third calculation stage of the data matrix is divided into N/M butterfly junctions based on the cardinality M of the data matrix, and each butterfly junction includes at least one rotation factor, where M<N, and M and N are natural numbers.

The execution module 1150 is configured to: convert rotation factors of the N/M butterfly junctions of the data matrix into a rotation factor matrix.

In a possible implementation, the execution module 1150 is configured to:
determine at least one rotation factor set based on the rotation factors of the N/M butterfly junctions of the data matrix, where the at least one rotation factor set of the data matrix includes a same quantity of rotation factors; and for each rotation factor set of the data matrix, construct the rotation factor matrix based on the rotation factors in the rotation factor set of the data matrix.

In a possible implementation, the matrix multiplication calculation is performed through a matrix operation unit.

It should be noted that the receiving module 1110, the obtaining module 1120, the decomposing module 1130, the determining module 1140, and the execution module 1150 may be implemented by a processor, or may be implemented by a processor and a memory. The calculation module 1160 may be implemented by a matrix operation unit, or may be implemented by a matrix operation unit and a memory.

In this embodiment of this application, after receiving the FFT execution request sent by the application program, the processor may decompose the FFT calculation into a plurality of calculation stages based on the cardinality of the FFT calculation, and may determine the DFT calculation matrix of the DFT calculation in each calculation stage. When the DFT calculation is performed, the matrix multiplication calculation may be performed on the first data matrix and the DFT calculation matrix through a matrix operation unit, to implement the DFT calculation. In this way, the DFT calculation in the calculation stages is converted into the matrix operation, and the matrix operation may be implemented through the matrix operation unit. One matrix operation may complete the DFT calculation on a plurality of data elements in the first data matrix, so that efficiency of performing the DFT calculation in the calculation stages can be improved, and then efficiency of performing the FFT calculation can be improved.

It should be noted that, when the apparatus for performing FFT provided in the foregoing embodiment performs the FFT, division of the foregoing functional modules is merely used as an example for description. In actual applications, the foregoing functions may be allocated to different functional modules for implementation based on a requirement. That is, an internal structure of the apparatus for performing the FFT is divided into different functional modules, to implement all or some of the foregoing described functions. In addition, the apparatus for performing the FFT provided in the foregoing embodiment and the method embodiment for performing the FFT belong to the same concept. For a specific implementation process thereof, refer to the method embodiments, and details are not described herein again.

In the foregoing embodiment, all or part of the software, hardware, firmware, or any combination thereof may be implemented. When the software is used for implementation, all or part of the implementation may be implemented in a form of a computer program product. The computer program product includes one or more computer instructions. When the computer program instructions are loaded and executed on a device, the procedures or functions according to embodiments of this application are all or partially generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, and microwave, or the like) manner. The computer-readable storage medium may be any available medium that can be accessed by a device, or a data storage device, such as a server or a data center that includes one or more available media integrations. The available medium may be a magnetic medium (for example, a floppy disk, a hard disk, a magnetic tape), an optical medium (for example, a digital video disk (Digital Video Disk, DVD)), or a semiconductor medium (for example, a solid-state drive).

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, or an optical disc.

An embodiment of this application further provides a computer program product. The computer program product includes a computer program stored in a computer-readable storage medium. The computing program is loaded by a processor to implement the foregoing provided method for performing FFT, or implement a function of the foregoing provided apparatus for performing FFT. The foregoing descriptions are merely embodiments of this application, but are not intended to limit this application. Any modification, equivalent replacement, or improvement made without departing from the spirit and principle of this application shall fall within the protection scope of this application.

**Claims**

1.  A method for performing FFT, wherein the method comprises:

    receiving a fast Fourier transformation FFT execution request sent by an application program;
    obtaining first input data on which an FFT calculation needs to be performed and that is indicated by the FFT execution request;
    decomposing the FFT calculation into a plurality of calculation stages based on a cardinality of the FFT calculation, wherein input data of a first calculation stage in the plurality of calculation stages is the first input data, input data of a second calculation stage after the first calculation stage is output data of a previous calculation stage of the second calculation stage, a third calculation stage in the plurality of calculation stages comprises a DFT calculation, and the third calculation stage is any one of the plurality of calculation stages;
determining a DFT calculation matrix corresponding to the DFT calculation in the third calculation stage;
determining, based on input data of the third calculation stage when a calculation in the third calculation stage is performed, a first data matrix on which a matrix operation is performed with the DFT calculation matrix; and
performing a matrix multiplication calculation on the DFT calculation matrix and the first data matrix to implement the DFT calculation, and returning a calculation result to the application program after the plurality of calculation stages are completed.

2. The method according to claim 1, wherein the determining a DFT calculation matrix corresponding to the DFT calculation in the third calculation stage comprises:
determining, based on a cardinality corresponding to the third calculation stage and a preset correspondence between a cardinality and a DFT calculation matrix, the DFT calculation matrix corresponding to the DFT calculation in the third calculation stage.

3. The method according to claim 1, wherein the determining a DFT calculation matrix corresponding to the DFT calculation in the third calculation stage comprises:

converting a DFT coefficient corresponding to the DFT calculation in the third calculation stage into the DFT calculation matrix.

4. The method according to claim 1, wherein the third calculation stage further comprises a rotation factor calculation; and
the determining, based on input data of the third calculation stage, a first data matrix on which a matrix operation is performed with the DFT calculation matrix comprises:

performing the rotation factor calculation based on a rotation factor corresponding to the rotation factor calculation in the third calculation stage and the input data of the third calculation stage, to obtain input data of the DFT calculation; and
converting the input data of the DFT calculation into the first data matrix on which the matrix operation is performed with the DFT calculation matrix.

5. The method according to claim 4, wherein the performing the rotation factor calculation based on a rotation factor corresponding to the rotation factor calculation in the third calculation stage and the input data of the third calculation stage comprises:

if a quantity of times that a same rotation factor in the rotation factor calculation participates in the calculation is greater than or equal to a first quantity threshold, determining a rotation factor matrix corresponding to each rotation factor in the rotation factor calculation;
converting the input data of the third calculation stage into a second data matrix; and
performing the matrix multiplication calculation on the rotation factor matrix and the second data matrix to implement the rotation factor calculation, to obtain the first data matrix.

6. The method according to claim 1, wherein the third calculation stage further comprises a rotation factor calculation, and the first data matrix is a matrix converted based on the input data of the third calculation stage; and
after the performing a matrix multiplication calculation on the DFT calculation matrix and the first data matrix to implement the DFT calculation, the method further comprises:

if a quantity of times that a same rotation factor in the rotation factor calculation participates in the calculation is greater than or equal to a first quantity threshold, determining a rotation factor matrix corresponding to each rotation factor in the rotation factor calculation; and
performing the matrix multiplication calculation on a third data matrix that is obtained by performing the DFT calculation and the rotation factor matrix, to implement the rotation factor calculation.

7. The method according to claim 1, wherein the third calculation stage further comprises a rotation factor calculation; and
the performing a matrix multiplication calculation on the DFT calculation matrix and the first data matrix to implement the DFT calculation comprises:

determining a rotation factor matrix corresponding to each rotation factor in the rotation factor calculation;

if it is determined that the rotation factor matrix and the DFT calculation matrix meet a matrix combination condition, multiplying the rotation factor matrix and the DFT calculation matrix to obtain a combined calculation matrix; and

performing the matrix multiplication calculation on the combined calculation matrix and the first data matrix.

8. The method according to any one of claims 5 to 7, wherein the third calculation stage corresponds to a cardinality M, a quantity of pieces of input data of the third calculation stage is N, the third calculation stage is divided into N/M butterfly junctions based on the cardinality M, and each butterfly junction comprises at least one rotation factor, wherein M<N, and M and N are natural numbers; and

the determining a rotation factor matrix corresponding to each rotation factor in the rotation factor calculation comprises:

converting rotation factors of the N/M butterfly junctions into a rotation factor matrix.

9. The method according to claim 8, wherein the converting rotation factors of the N/M butterfly junctions into a rotation factor matrix comprises:

determining at least one rotation factor set based on the rotation factors of the N/M butterfly junctions, wherein the at least one rotation factor set comprises a same quantity of rotation factors; and

for each rotation factor set, constructing the rotation factor matrix based on the rotation factors in the rotation factor set.

10. The method according to any one of claims 1 to 9, wherein the matrix multiplication calculation is performed through a matrix operation unit.

11. An apparatus for performing FFT, wherein the apparatus comprises:

a receiving module, configured to receive a fast Fourier transformation FFT execution request sent by an application program;

an obtaining module, configured to obtain first input data on which an FFT calculation needs to be performed and that is indicated by the FFT execution request;

a decomposing module, configured to decompose the FFT calculation into a plurality of calculation stages based on a cardinality of the FFT calculation, wherein input data of a first calculation stage in the plurality of calculation stages is the first input data, input data of a second calculation stage after the first calculation stage is output data of a previous calculation stage of the second calculation stage, a third calculation stage in the plurality of calculation stages comprises a DFT calculation, and the third calculation stage is any one of the plurality of calculation stages;

a determining module, configured to determine a DFT calculation matrix corresponding to the DFT calculation in the third calculation stage;

an execution module, configured to determine, based on input data of the third calculation stage when a calculation in the third calculation stage is performed, a first data matrix on which a matrix operation is performed with the DFT calculation matrix; and

a calculation module, configured to perform a matrix multiplication calculation on the DFT calculation matrix and the first data matrix to implement the DFT calculation, and return a calculation result to the application program after the plurality of calculation stages are completed.

12. The apparatus according to claim 11, wherein the determining module is configured to:
determine, based on a cardinality corresponding to the third calculation stage and a preset correspondence between a cardinality and a DFT calculation matrix, the DFT calculation matrix corresponding to the DFT calculation in the third calculation stage.

13. The apparatus according to claim 11, wherein the determining module is configured to:
convert a DFT coefficient corresponding to the DFT calculation in the third calculation stage into the DFT calculation matrix.

14. The apparatus according to claim 11, wherein the calculation module is configured to:

perform a rotation factor calculation based on a rotation factor corresponding to the rotation factor calculation in the third calculation stage and the input data of the third calculation stage, to obtain input data of the DFT calculation; and
the execution module is configured to: convert the input data of the DFT calculation into the first data matrix on which the matrix operation is performed with the DFT calculation matrix.

15. The apparatus according to claim 14, wherein the execution module is configured to:

if a quantity of times that a same rotation factor in the rotation factor calculation participates in the calculation is greater than or equal to a first quantity threshold, determine a rotation factor matrix corresponding to each rotation factor in the rotation factor calculation; and convert the input data of the third calculation stage into a second data matrix; and
the calculation module is configured to: perform the matrix multiplication calculation on the rotation factor matrix and the second data matrix to implement the rotation factor calculation, to obtain the first data matrix.

16. The apparatus according to claim 11, wherein the third calculation stage further comprises a rotation factor calculation, and the first data matrix is a matrix converted based on the input data of the third calculation stage;

the execution module is further configured to: if a quantity of times that a same rotation factor in the rotation factor calculation participates in the calculation is greater than or equal to a first quantity threshold, determine a rotation factor matrix corresponding to each rotation factor in the rotation factor calculation; and
the calculation module is configured to: perform the matrix multiplication calculation on a third data matrix that is obtained by performing the DFT calculation and the rotation factor matrix, to implement the rotation factor calculation.

17. The apparatus according to claim 11, wherein the third calculation stage further comprises a rotation factor calculation;

the execution module is configured to: determine a rotation factor matrix corresponding to each rotation factor in the rotation factor calculation; and if it is determined that the rotation factor matrix and the DFT calculation matrix meet a matrix combination condition, multiply the rotation factor matrix and the DFT calculation matrix to obtain a combined calculation matrix; and
the calculation module is configured to: perform the matrix multiplication calculation on the combined calculation matrix and the first data matrix.

18. The apparatus according to any one of claims 15 to 17, wherein the third calculation stage corresponds to a cardinality M, a quantity of pieces of input data of the third calculation stage is N, the third calculation stage is divided into N/M butterfly junctions based on the cardinality M, and each butterfly junction comprises at least one rotation factor, wherein M<N, and M and N are natural numbers; and
the execution module is configured to: convert rotation factors of the N/M butterfly junctions into a rotation factor matrix.

19. The apparatus according to claim 18, wherein the execution module is configured to:

determine at least one rotation factor set based on the rotation factors of the N/M butterfly junctions, wherein the at least one rotation factor set comprises a same quantity of rotation factors; and
for each rotation factor set, construct the rotation factor matrix based on the rotation factors in the rotation factor set.

20. The apparatus according to any one of claims 11 to 19, wherein the matrix multiplication calculation is performed through a matrix operation unit.

21. A computer device for performing FFT, wherein the computer device comprises a processor and a matrix operation unit, wherein
the processor is configured to perform the method according to any one of claims 1 to 9; and the matrix operation unit is configured to perform the matrix multiplication calculation.

22. A computer-readable storage medium, wherein the computer-readable storage medium stores computer program code, and when the computer program code is executed by a computer device, the computer device is enabled to perform the method according to any one of claims 1 to 10.

**23.** A computer program product comprising instructions, wherein when the computer program product runs on a computer device, the computer device is enabled to perform the method according to any one of claims 1 to 10.

Processor 110

Matrix operation unit 120

Memory 130

SoC

Computer device

FIG. 1

Processor 210

Memory 230

SoC 200

Processor 310

Matrix operation unit 320

Memory 330

SOC 300

Computer device

FIG. 2

Matrix B

Matrix C

Matrix D

Matrix operation unit

Matrix A

FIG. 3

FIG. 4

FIG. 5

```
┌─────────────────────┐                    ┌─────────────────────┐
│                     │                    │                     │
│      Processor      │                    │ Matrix operation unit│
│                     │                    │                     │
└──────────┬──────────┘                    └──────────┬──────────┘
           │                                          │
┌──────────┴──────────────────────────┐              │
│ 601. Receive an FFT execution request sent by        │
│        an application program        │              │
└──────────┬──────────────────────────┘              │
           │                                          │
┌──────────┴──────────────────────────┐              │
│ 602. Obtain first input data on which FFT is to      │
│             be performed             │              │
└──────────┬──────────────────────────┘              │
           │                                          │
┌──────────┴──────────────────────────┐              │
│ 603. Determine calculation stages for                │
│        performing a FFT calculation  │              │
└──────────┬──────────────────────────┘              │
           │                                          │
┌──────────┴──────────────────────────┐              │
│ 604. Determine, based on a cardinality               │
│ corresponding to each calculation stage, a DFT       │
│ calculation matrix corresponding to a DFT            │
│ calculation in each calculation stage │             │
└──────────┬──────────────────────────┘              │
           │                                          │
┌──────────┴──────────────────────────┐              │
│ 605. Determine a first data matrix                   │
│ corresponding to the DFT calculation in the          │
│          calculation stage           │              │
└──────────┬──────────────────────────┘              │
           │        606. Matrix operation             │
           │             instruction                  │
           │─────────────────────────────────────────>│
           │                              ┌───────────┴──────────────────────┐
           │                              │ 607. Perform a matrix operation based on the │
           │                              │       matrix operation instruction  │
           │                              └───────────┬──────────────────────┘
           │        608. Matrix operation             │
           │        completion notification           │
           │<─────────────────────────────────────────│
┌──────────┴──────────────────────────┐              │
│ 609. After determining to perform the                │
│ calculation stages, return a calculation result of   │
│ performing the FFT to the application program │      │
└──────────┬──────────────────────────┘              │
           │                                          │
```

FIG. 6

Matrix operation instruction

CPU

Matrix LOAD/
STORE instruction

LOAD data

Register

Matrix A

Matrix A, B, C

Memory

Matrix B

Matrix operation
unit

STORE data

Matrix C

Matrix D

FIG. 7

Obtain input data of a DFT calculation — 801

Select, based on an arrangement order of data elements in the input data of the DFT calculation, a first quantity of data elements from the input data of the DFT calculation, to form a first matrix of a first size, and determine a sparseness of the first matrix — 802

If the sparseness of the first matrix is less than a preset sparseness threshold, determine the first matrix as a first data matrix — 803

If the sparseness of the first matrix is greater than or equal to a sparseness threshold, determine the first matrix as an intermediate matrix — 804

Perform compression processing on the intermediate matrix to obtain a second matrix — 805

Select, based on the arrangement order of the data elements in the input data of the DFT calculation, a second quantity of data elements from unselected data elements in the input data of the DFT calculation, and supplement the second quantity of data elements to a second matrix, to obtain a third matrix of a target size — 806

If the sparseness of the third matrix is less than the sparseness threshold, determine the third matrix as the first data matrix, if the sparseness of the third matrix is greater than or equal to the sparseness threshold, determine the third matrix as the intermediate matrix, and perform processing in step 805 — 807

If the sparseness of the third matrix is less than the sparseness threshold, determine the third matrix as the first data matrix — 808

FIG. 8

| Processor | | Matrix operation unit |
|---|---|---|

901. Determine a rotation factor calculation that meets a condition of a matrix operation

902. Determine a rotation factor matrix corresponding to the rotation factor calculation that meets the condition of the matrix operation

903. Convert input data of the rotation factor calculation into a data matrix

904. Matrix operation instruction

905. Perform a matrix multiplication calculation corresponding to the data matrix and the rotation factor matrix

FIG. 9

| Processor | | Matrix operation unit |
|---|---|---|

1001. Determine if there is a target calculation stage that meets a combined calculation condition

1002. Matrix operation instruction →

1003. Perform a matrix multiplication calculation on a DFT calculation matrix and a rotation factor matrix to obtain a combined calculation matrix corresponding to the target calculation stage

← 1004. Matrix operation completion notification

1005. Determine a first data matrix corresponding to the target calculation stage

1006. Matrix operation instruction →

1007. Perform the matrix multiplication calculation corresponding to the first data matrix and the combined calculation matrix

FIG. 10

Apparatus for performing FFT

Receiving module — 1110

Obtaining module — 1120

Decomposing module — 1130

Determining module — 1140

Execution module — 1150

Calculation module — 1160

FIG. 11

## INTERNATIONAL SEARCH REPORT

| International application No. |
|---|
| **PCT/CN2022/105490** |

| A. | CLASSIFICATION OF SUBJECT MATTER |
|---|---|

G06F 17/14(2006.01)i

According to International Patent Classification (IPC) or to both national classification and IPC

| B. | FIELDS SEARCHED |
|---|---|

Minimum documentation searched (classification system followed by classification symbols)

G06F; H04J

Documentation searched other than minimum documentation to the extent that such documents are included in the fields searched

Electronic data base consulted during the international search (name of data base and, where practicable, search terms used)

CNKI, CNPAT, WPI, EPODOC, IEEE, BING: 快速傅里叶, 快速傅利叶, 离散傅里叶, 离散傅利叶, 阶段, 基, 旋转, 转换, 转化, 矩阵, 乘法, FFT, DFT, stage, radix, rotat+, convert+, matrix, multipl+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | EP 2144172 A1 (MITSUBISHI ELECTRIC R&D CENTRE EUROPE B.V. et al.) 13 January 2010 (2010-01-13)<br>description, paragraphs [0002]-[0005], claim 2, and figures 1-8 | 1-23 |
| A | US 2019384803 A1 (APPLE INC.) 19 December 2019 (2019-12-19)<br>entire document | 1-23 |
| A | US 2005182806 A1 (QUALCOMM INC.) 18 August 2005 (2005-08-18)<br>entire document | 1-23 |
| A | CN 101154216 A (OKI ELECTRIC INDUSTRY CO., LTD.) 02 April 2008 (2008-04-02)<br>entire document | 1-23 |
| A | CN 110532510 A (HEFEI UNIVERSITY OF TECHNOLOGY) 03 December 2019 (2019-12-03)<br>entire document | 1-23 |
| A | US 2008155002 A1 (JANCZAK, T. et al.) 26 June 2008 (2008-06-26)<br>entire document | 1-23 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 September 2022** | **12 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/105490**

| Patent document cited in search report | | | Publication date (day/month/year) | Patent family member(s) | | | Publication date (day/month/year) |
|---|---|---|---|---|---|---|---|
| EP | 2144172 | A1 | 13 January 2010 | JP | 2010016830 | A | 21 January 2010 |
| US | 2019384803 | A1 | 19 December 2019 | None | | | |
| US | 2005182806 | A1 | 18 August 2005 | ES | 2315735 | T3 | 01 April 2009 |
| | | | | AT | 412220 | T | 15 November 2008 |
| | | | | TW | 200534121 | A | 16 October 2005 |
| | | | | CA | 2547488 | A1 | 23 June 2005 |
| | | | | JP | 2007513431 | A | 24 May 2007 |
| | | | | RU | 2006123934 | A | 10 January 2008 |
| | | | | CN | 1914607 | A | 14 February 2007 |
| | | | | AU | 2004297978 | A1 | 23 June 2005 |
| | | | | BR | PI0417222 | A | 21 February 2007 |
| | | | | DE | 602004017351 | D1 | 04 December 2008 |
| | | | | KR | 20060096511 | A | 11 September 2006 |
| | | | | IL | 176050 | D0 | 05 October 2006 |
| | | | | WO | 2005057423 | A2 | 23 June 2005 |
| | | | | EP | 1690196 | A2 | 16 August 2006 |
| | | | | MX | PA06006391 | A | 23 August 2006 |
| | | | | AR | 046869 | A1 | 28 December 2005 |
| | | | | IN | 3170DELNP2006 | A | 24 August 2007 |
| CN | 101154216 | A | 02 April 2008 | JP | 2008083852 | A | 10 April 2008 |
| | | | | KR | 20080028281 | A | 31 March 2008 |
| | | | | US | 2008215656 | A1 | 04 September 2008 |
| CN | 110532510 | A | 03 December 2019 | None | | | |
| US | 2008155002 | A1 | 26 June 2008 | None | | | |

Form PCT/ISA/210 (patent family annex) (January 2015)

**REFERENCES CITED IN THE DESCRIPTION**

**Patent documents cited in the description**

- CN 202111132603
- CN 202111617811